# EUROPÄISCHE PATENTSCHRIFT

(11) **EP 3 551 315 B1**
(45) Veröffentlichungstag und Bekanntmachung des Hinweises auf die Patenterteilung: **08.06.2022**
(21) Anmeldenummer: 17809305.0
(22) Anmeldetag: 06.12.2017
(51) Int. Cl.: B01D 46/24, B01D 29/11

(54) **ENDSCHEIBE, FILTERELEMENT MIT ENDSCHEIBE UND FILTERSYSTEM**
END DISK, FILTER ELEMENT WITH END DISK, AND FILTER SYSTEM
DISQUE D'EXTRÉMITÉ, ÉLÉMENT FILTRE À DISQUE D'EXTRÉMITÉ ET SYSTÈME DE FILTRATION

(30) Priorität: 06.12.2016 DE 102016014443
(43) Veröffentlichungstag der Anmeldung: 16.10.2019
(73) Patentinhaber: MANN+HUMMEL GmbH, 71636 Ludwigsburg (DE)
(72) Erfinder: ABOKHALAF, Mahdi, 71636 Ludwigsburg (DE); ZHOU, Jiayou, Shanghai 201800 (CN)
(74) Vertreter: Mann + Hummel Intellectual Property
(86) Internationale Anmeldenummer: PCT/EP2017/081761
(87) Internationale Veröffentlichungsnummer: WO 2018/104416

(56) Entgegenhaltungen:
- EP-A1- 2 201 993
- WO-A1-2015/173624
- DE-A1-102014 002 241
- US-A- 5 660 063
- US-A1- 2013 206 680
- US-A1- 2013 248 436
- US-A1- 2014 190 880

## Beschreibung

### Technisches Gebiet

Die Erfindung betrifft eine Endscheibe für ein auswechselbares Filterelement für Fluid, insbesondere Flüssigkeit, insbesondere Öl oder Kraftstoff, insbesondere einer Brennkraftmaschine, insbesondere eines Kraftfahrzeugs, ein Filterelement, welches die Endscheibe umfasst, und ein Filtersystem.

Ferner betrifft die Erfindung ein Filterelement für ein Filtersystem.

### Stand der Technik

Aus der EP 2 070 575 B1 ist ein Ölfilter für ein Kraftfahrzeug bekannt, mit einem Filtergehäuse mit einem ersten Gewinde und einem Leerlaufkanal. Auf diesen Flüssigkeitsfilter wird ein Filterdeckel mit einem zweiten Gewinde aufgeschraubt. Am Filterdeckel ist ein Filterumgehungsventil zur Umgehung des Filterelements bei zu hohem Druckverlust beim Durchtritt der Flüssigkeit durch das Filtermedium des Filterelements angebracht. Am Filterdeckel sind erste Bajonettverbindungen angebracht. Das Filterelement ist als Rundfilterelement mit einem sterngefalteten Faltenbalg ausgeführt. Zweite Bajonettverbindungen zur Befestigung des Filterelements am Filterdeckel sind am Filterelement angebracht. Die ersten und zweiten Bajonettverbindungen sind so aufeinander abgestimmt, dass das Filterelement in den Deckel eingesetzt werden kann, sodass die ersten Bajonettverbindungen mit den zweiten Bajonettverbindungen verriegeln. Die Bajonettverbindungen sind so ausgestaltet, dass sie sich beim Anschrauben des Filterdeckels zusammen mit dem über die Bajonettverbindungen befestigten Filterelement im Filterdeckel lösen. Zum Lösen der Bajonettverbindungen müssen diese leichter gängig sein als der Reibschluss durch eine doppelkonzentrische Dichtung zum Verschluss des Leerlaufkanals, die am Filterelement angebracht ist. Durch die Drehung rutschen dann die ersten Bajonettverbindungen des Filterdeckels aus den zweiten Bajonettverbindungen des Filterelements heraus und schlagen beim Weiterdrehen an den zweiten Bajonettverbindungen an, ohne sich hierbei wieder zu verbinden. Das Filterelement ist daher nach dem Einschrauben vom Filterdeckel entkoppelt.

Die WO 2004/007052 A1 ist darauf gerichtet, eine Vorrichtung zum Abtrennen von Verunreinigungen aus dem Schmieröl einer Brennkraftmaschine bereitzustellen, bei welcher insbesondere ein einfaches Zerlegen oder Zusammenbauen schneller und sauberer erfolgen kann, und offenbart einen Filtereinsatz, wobei der Filtereinsatz in einem im Betrieb verschlossenen zweiteiligen Gehäuse mit einem festen, unteren Gehäuseteil und einem abnehmbaren, oberen Schraubdeckel angeordnet ist und wobei der Schraubdeckel und der Filtereinsatz miteinander in Eingriff bringbare, lösbare Verbindungsmittel zur Übertragung axialer Zugkräfte aufweisen, wobei mittels dieser Verbindungsmittel beim Losdrehen des Schraubdeckels der Filtereinsatz aus dem Gehäuse herausnehmbar ist. Hierzu offenbart die WO 2004/007052 A1 einen herkömmlichen Filtereinsatz mit einem Kranz von Schnapphaken und einem an der Unterseite des Schraubdeckels konzentrisch angeordneten Ring mit Nockensegmenten, wobei durch Verdrehen des Schraubdeckels in Losdrehrichtung der in den Ring bewegte Kranz von Schnapphaken axial nicht aus dem Ring mit den Nockensegmenten heraus bewegbar ist. Die WO 2004/007052 A1 offenbart, dass das Anordnen des fest mit dem Schraubdeckel verbundenen, insbesondere verdrehfest und verliersicher in den Schraubdeckel eingesetzten Rings es erlaubt, keine Änderung an den herkömmlichen Filterelementen vornehmen zu müssen.

Die WO 2008/030707 A1 ist darauf gerichtet, ein Filterelement mit einem Verbinder bereitzustellen, der das Filterelement mit einem Filterkopf verbindet und korrekte Installation und vereinfachtes Entfernen des verschmutzten Filterelements ermöglicht, ein lösbares Koppeln erlaubt und ungewolltes Lösen des Filterelements aus dem Filter verhindert. Die WO 2008/030707 A1 offenbart hierzu ein Filterelement mit einer Endscheibe und einem Filterkopfverbinder, wobei der Filterkopfverbinder eine im Wesentlichen zylindrische Form aufweist und einen Clip umfasst, welcher mindestens teilweise vom Filterkopfverbinder radial beabstandet und parallel zu diesem angeordnet ist, wobei der Clip einer Drehbewegung zwischen dem Filterkopf und dem Filterkopfverbinder von einem Haltebereich zu einem Freigabebereich widersteht.

Die DE 10 2012 000 876 C5 ist darauf gerichtet, einen Flüssigkeitsfilter und eine Filterelement-Vorrichtung bereitzustellen, die sowohl eine schwingungsarme Anordnung als auch einen ressourcenschonenden Filterelementwechsel erlauben, und offenbart ein Filterelement mit einer Endscheibe mit einer zur Montageachse koaxialen Auslassöffnung, welche in einem zylindrischen Anschlusskragen realisiert ist, wobei der Anschlusskragen einstückig mit der Endscheibe verbunden ist. Der Anschlusskragen erstreckt sich an der dem Innenraum abgewandten Außenseite der Endscheibe in axialer Richtung. Radial außerhalb des Anschlusskragens sind drei identische Verriegelungselemente einer Bajonettverbindung angeordnet. Jedes der Verriegelungselemente verfügt über einen Axialabschnitt, welcher sich im Wesentlichen umfangsmäßig und in axialer Richtung erstreckt. Der Axialabschnitt ist einstückig mit der Endscheibe ausgebildet. Auf der der Endscheibe in axialer Richtung gegenüberliegenden Seite des Axialabschnitts ist einstückig ein Radialabschnitt angeordnet. Der Radialabschnitt erstreckt sich in Umfangsrichtung und von dem Axialabschnitt im Wesentlichen radial nach außen. Die Axialabschnitte der Verriegelungselemente erstrecken sich entlang eines gedachten Kreises um die Montageachse. Auf einer in Schließdrehrichtung der Gehäuse-Kopf-Verbindung hinteren Seite ist an dem Radialabschnitt und an dem Axialabschnitt ein Anschlag angeordnet. Die Mitten der Verriegelungselemente befinden sich insgesamt in Umfangsrichtung gleichmäßig verteilt an den Ecken eines gedachten gleichseitigen Dreiecks, dessen Mittelpunkt auf der Montageachse liegt. Die DE 10 2012 000 876 C5 offenbart weiterhin ein Adapterelement zwischen Endscheibe und Adapterstutzen eines Filterkopfs, wobei das Adapterelement an der dem Filterelement zugewandten Seite drei identische Gegenverriegelungselemente der Bajonettverbindung aufweist, welche mit dem Adapterelement einstückig verbunden sind. Weitere Filterelemente mit Endscheiben sind in der US 2014/190880, der US 5,660,063, der US 2013/248436 und der EP 2201993 offenbart.

### Offenbarung der Erfindung

Eine Aufgabe der Erfindung ist es, eine Endscheibe für ein Filterelement, insbesondere für ein auswechselbares Filterelement zu schaffen, welche konstruktiv einfach eine sichere Lagerung des Filterelements in einem Filtergehäuse während des Betriebs ermöglicht, die Übertragung von Vibrationen eines Filtergehäuses im Betriebszustand auf das Filterelement verringert und zusätzlich eine einfache, schnelle und dabei sichere Entnahme des Filterelements ermöglicht.

Eine weitere Aufgabe der Erfindung ist es, ein Filterelement mit einer solchen Endscheibe und ein Filtersystem mit einem solchen Filterelement bereitzustellen.

Die Aufgabe wird gelöst durch eine Endscheibe für ein Filterelement, insbesondere eine Filterelementendscheibe, insbesondere eine Endscheibe für ein auswechselbares Filterelement, nach Anspruch 1. Die Endscheibe weist auf einer Stirnseite mindestens zwei separate, kreisbogenförmige Kopplungselemente auf, die zum axialen Hintergriff für ein korrespondierendes Gehäusekopplungselement ausgebildet sind, wobei die Kopplungselemente bezüglich einer radialen Verbindungsachse einander gegenüberliegend angeordnet sind und wobei mindestens ein Endanschlag mindestens einem Kopplungselement zugeordnet ist. Dies hat den Vorteil, dass das Gehäusekopplungselement einfach eingesetzt werden kann und zusätzlich, insbesondere beim Auseinanderschrauben oder Abschrauben des Gehäuses, die Endscheibe bzw. das Filterelement sicher mit dem Gehäusekopplungselement gekoppelt ist, also nicht über den Endanschlag hinaus gedreht werden kann, jedoch einfach durch eine Gegendrehbewegung wieder gelöst werden kann.

Der Endanschlag kann zu dem Kopplungselement beabstandet sein. Der Endanschlag befindet sich in dieser Ausführungsform auf der Stirnseite der Endscheibe. Der Endanschlag kann insbesondere in Umfangsrichtung beabstandet sein. Die Beabstandung in Umfangsrichtung ist hierbei bezogen auf das Auseinanderschrauben oder -drehen eines Gehäuses bei eingesetztem Filterelement in Losdrehrichtung, bevorzugt im Gegenuhrzeigersinn. Anschaulich beschrieben ist der Endanschlag zu dem Kopplungselement in Losdrehrichtung des ersten Gehäuseteils vom zweiten Gehäuseteil, insbesondere bevorzugt vorbestimmt im Gegenuhrzeigersinn oder vorbestimmt im Uhrzeigersinn, benachbart.

Der Endanschlag kann auch zusätzlich oder alternativ radial, insbesondere radial nach außen von der Verbindungsachse aus betrachtet, beabstandet benachbart auf der Endscheibe angeordnet sein. Der Endanschlag kann hierbei anschaulich beschrieben insbesondere zum Kopplungselement konzentrisch angeordnet sein.

Alternativ kann auch mindestens ein Kopplungselement den Endanschlag aufweisen. Der jeweilige Endanschlag kann insbesondere auch an einem Ende des Kopplungselements angeordnet sein. Der Endanschlag kann beispielsweise von der Verbindungsachse aus betrachtet am Außenumfang des Kopplungselements angeordnet sein. Der Endanschlag kann auch einstückig mit dem Kopplungselement ausgebildet sein. Der Endanschlag kann insbesondere als Vorsprung oder Nase oder insbesondere tangential zur Querplanfläche des Kopplungselements und radial von der Verbindungsachse nach außen gerichtet ausgebildet sein. Im Fall, dass der Endanschlag an einem Kopplungselement angeordnet ist, kann der Endanschlag insbesondere in Höhe des Hintergriffs für das Gehäusekopplungselement angeordnet sein.

Die Kopplungselemente sind bevorzugt mit der Endscheibe fest verbunden, insbesondere einstückig mit dieser ausgebildet. Die Endanschläge sind bevorzugt mit den zugeordneten Kopplungselementen und/oder mit der Endscheibe verbunden, insbesondere einstückig mit diesen ausgebildet. Die Kopplungselemente und/oder die Endanschläge können somit einstückig mit der Endscheibe sein, es ist aber auch möglich, die Kopplungselemente und/oder die Endanschläge fest, aber zerstörungsfrei lösbar mit der Endscheibe, beispielsweise durch Verrasten, zu verbinden oder die Kopplungselemente und/oder die Endanschläge, beispielsweise durch Kleben oder Schweißen, nicht zerstörungsfrei lösbar fest zu verbinden.

In einer bevorzugten Ausführungsform weist die Endscheibe auf der Stirnseite zwei oder vier separate, insbesondere separat voneinander beabstandete, kreisbogenförmige Kopplungselemente auf, wobei den Kopplungselementen jeweils ein Endanschlag zugeordnet ist bzw. die Kopplungselemente diese aufweisen, wobei der jeweilige Endanschlag an einem Ende des Kopplungselements angeordnet ist und wobei die zwei Kopplungselemente bezüglich einer radialen Verbindungsachse punktsymmetrisch zueinander angeordnet sind.

Als Kopplung wird erfindungsgemäß ein axiales Hintergreifen der jeweiligen Kopplungspaare, also des Kopplungselements der Endscheibe und des korrespondierenden Gehäusekopplungselements im eingesetzten Zustand des die Endscheibe aufweisenden Filterelements im Gehäuseteil verstanden. Anschaulich beschrieben ist das Filterelement im gekoppelten Zustand der Endscheibe mit dem Gehäuseteil in Richtung der Verbindungsachse zugfest, jedoch durch Drehung lösbar verbunden.

Separat bedeutet im Sinne der Erfindung, dass die beiden Kopplungselemente getrennt voneinander sind bzw. unverbunden sind, insbesondere separat voneinander beabstandet angeordnet sind. Die beiden separaten, kreisbogenförmigen Kopplungselemente der Endscheibe bilden somit jeweils einen Kopplungsbereich und die dazwischen liegenden freien Bereiche bilden somit jeweils einen insbesondere kreisbogenförmigen Lösebereich auf der Stirnseite der Endscheibe für ein korrespondierendes Gehäusekopplungselement. Somit können die Gehäusekopplungselemente durch eine Drehbewegung, beispielsweise beim Losdrehen des ersten Gehäuseteils zum Öffnen des Gehäuses, in Kopplung mit den Kopplungselementen der Endscheibe gebracht werden und nach erfolgtem Losdrehen, durch eine weitere Drehbewegung in Gegenrichtung, zum Wechseln des Filterelements, wieder gelöst werden. Das Filterelement ist beim Einsetzen in das Gehäuse koppelbar, sobald das Gewinde im Eingriff ist. Das Filterelement ist beim nachfolgenden Eindrehen in das Gehäuses in Eindrehrichtung und im Betriebszustand mit dem Gehäuse nicht gekoppelt, da in diesem Fall das Gehäusekopplungselement durch die Endanschläge der Endscheibe daran gehindert wird, in den Kopplungsbereich der Endscheibe einzugreifen, so dass die Gehäusekopplungselemente im Eindrehzustand und im Betriebszustand im Lösebereich der Endscheibe sind.

Der jeweilige Lösebereich kann kleiner, gleich oder größer gewählt werden als der Kopplungsbereich. Wird der Lösebereich größer gewählt, ist erst nach einer gegenüber der gleichgroßen Ausgestaltung weiteren Drehung beim Auseinanderschrauben des Gehäuses überhaupt ein Eingriff möglich, so dass durch die Wahl der Größe des Lösebereichs der Eingriffsbereich der Endscheibe vorbestimmt gewählt und beispielsweise auch an die Gewindesteigung eines Gehäuses optimal angepasst werden kann. Der Lösebereich ist bevorzugt kleiner als der Kopplungsbereich. In diesem Fall ist der notwendige Drehwinkel, um von dem Lösebereich in den Kopplungsbereich zu gelangen, am kleinsten. Da die Sicherungswirkung der erfindungsgemäßen Endscheibe während des Öffnens bzw. Auseinanderschraubens der Gehäuseteile stattfindet und das erfindungsgemäße Filterelement aus der gelösten Betriebsstellung beim Öffnen des Gehäuseteils schnell mit den Gehäusekopplungselementen koppeln soll, ist ein kleiner Lösebereich im Vergleich zur Größe des Kopplungsbereichs bevorzugt.

Einander gegenüberliegend bedeutet in der vorliegenden Anmeldung, dass die Kopplungselemente im Wesentlichen vom Mittelpunkt der Endscheibe bzw. von der Verbindungsachse aus betrachtet diametral gegenüber liegen.

Punktsymmetrisch bedeutet in der vorliegenden Anmeldung, dass die Kopplungselemente der Endscheibe durch die Spiegelung an einem Punkt, dem sogenannten Symmetriepunkt oder Symmetriezentrum, hier insbesondere bezogen auf den Schnittpunkt der Stirnseite der Endscheibe mit der Verbindungsachse bezüglich der Endscheibe bzw. eines Filterelements mit einem Gehäuseteil, insbesondere einem ersten Gehäuseteil, auf sich selbst abgebildet werden. Die Verbindungsachse ist insbesondere die Mittelachse der Stirnseite der Endscheibe bzw. des Filterelements. Es handelt sich anschaulich beschrieben somit um eine Drehung des jeweiligen Kopplungselements in der Fläche um 180° um die Mittelachse der Stirnseite der Endscheibe. Aus Symmetriegründen ist damit die Anzahl der Kopplungselemente gerade und beträgt insbesondere zwei oder vier.

Kreisbogenförmig bedeutet im Sinne der Erfindung, dass die Kopplungselemente in ihrer Form einer zu einem Kreisausschnitt gehörenden Kreislinie, also einem Kreisbogen, entsprechen. Ein Kreisausschnitt ist eine Teilfläche einer Kreisfläche, die von einem Kreisbogen und zwei vom Kreismittelpunkt ausgehenden Radien begrenzt wird.

Durch den Endanschlag können die Gehäusekopplungselemente anschaulich beschrieben somit bei einer Drehbewegung von dem erstem Gehäuseteil und der Endscheibe des Filterelements gegeneinander beim Zuschrauben des Filtergehäuses im Lösebereich bleiben und nicht beim nächsten Kopplungselement wieder in einen Kopplungsbereich geführt werden. Das Kopplungselement stößt in diesem Fall an den Endanschlag des Kopplungselements an. Bei einer Gegendrehbewegung beim Aufschrauben des Filtergehäuses kann andererseits das Gehäusekopplungselement nicht aus dem Kopplungsbereich herausgleiten, wenn es durch die Drehbewegung eingeführt ist, so dass beim Lösen eines ersten Gehäuseteils von einem zweiten Gehäuseteil das erste Gehäuseteil und das Filterelement mittels der Endscheibe sicher verbunden bleiben. Bevorzugt weisen die mindestens zwei Kopplungselemente jeweils einen Endanschlag auf. Dies hat den Vorteil, dass die Kraftverteilung optimiert gleichmäßig erfolgen kann.

In einer Ausführungsform können die zwei Kopplungselemente der Endscheibe jeweils zwei Halter aufweisen, somit weist jedes der beiden Kopplungselemente der Endscheibe jeweils zwei Halter auf. Dies hat den zusätzlichen Vorteil einer konstruktiv einfachen Abstützung und Verstärkung des Kopplungselements bzw. der Endscheibe, beispielsweise für den Einsatz für ein schweres, insbesondere im beladenen Zustand schweres, Filterelement im Betriebszustand.

In einer weiteren Ausführungsform weisen die Kopplungselemente zwischen den beiden Haltern entlang der Längserstreckung des jeweiligen Kopplungselements einen Freiraum auf. Dies hat den Vorteil, dass das Kopplungselement mit möglichst wenig Materialeinsatz herstellbar ist, dabei eine ausreichende Stabilität auch für schwere Filterelemente aufweist und zudem der Freiraum konstruktiv einfach eine zusätzliche Eingriffsöffnung bilden kann.

Mindestens ein Halter des jeweiligen Kopplungselements kann zusätzlich eine Eindrehschräge aufweisen, insbesondere eine Eindrehschräge, welche bezogen auf die Verbindungsachse zum Endanschlag des Kopplungselements im Gegenuhrzeigersinn oder im Uhrzeigersinn angeordnet ist. Dies hat den Vorteil, dass die Endscheibe vorbestimmt insbesondere mit dem Gewinde beispielsweise eines Filtergehäuseteils besonders einfach und sicher eingedreht werden kann. Es ist auch möglich, dass die Richtung derart gewählt wird, dass die Endscheibe in Gegenrichtung zu einem Gewinde drehbar ist.

In einer nicht erfindungsgemäßen Ausführungsform sind die Kopplungselemente an einer Außenkontur der Endscheibe angeordnet. Dies hat den Vorteil, dass Kopplungselemente radial in Umfangsrichtung erstreckt sein können und so an eine vorgegebene große Belastung optimal und konstruktiv einfach angepasst werden können.

Erfindungsgemäß sind die Kopplungselemente von der Außenkontur der Endscheibe beabstandet angeordnet. Die Kopplungselemente können insbesondere an einer Innenkontur oder auch Öffnungskontur angeordnet sein, wenn die Endscheibe eine Öffnung aufweist. Für den Fall einer geschlossenen Endscheibe ist die Innenkontur ein gedachter Kreis, wobei insbesondere bei runder Außenkontur der Endscheibe der Innendurchmesser des gedachten Kreises vorzugsweise in etwa dem halben Außendurchmesser entspricht. Die Endscheibe kann erfindungsgemäß auch eine rechteckige, insbesondere quadratische Außenkontur aufweisen. Für den Fall der rechteckigen Außenkontur entspricht der Innendurchmesser dann bevorzugt in etwa der halben Breite des Außendurchmessers. Dies hat den Vorteil, dass die Größe des Kopplungselements zur Einhaltung des Grenzwertes der Flächenbelastung und der zum Koppeln beim Eindrehen notwendige Drehwinkel optimiert aufeinander abgestimmt werden können.

In einer weiteren Ausführungsform sind die Endanschläge bevorzugt bezogen auf die radiale Verbindungsachse zueinander im Gegenuhrzeigersinn oder im Uhrzeigersinn angeordnet. Dies hat den Vorteil, dass diese konstruktiv einfach so gewählt werden können, dass sie wahlweise beim Eindrehen oder beim Lösen des Filterelements in Eingriff kommen können.

Die Endscheibe weist zu den Kopplungselementen korrespondierende Stützelemente auf, wobei die Stützelemente radial und axial beabstandet zu den Kopplungselementen und zu dem mindestens einen Endanschlag angeordnet sind, insbesondere zur Bildung eines Einführbereichs, für Gehäusekopplungselemente eines Filtergehäuses. Dies hat den Vorteil, dass das Stützelement das Gehäusekopplungselement zusätzlich abstützt und der Einführbereich ein Verhaken des Elements beim Eindrehen bzw. Einsetzen in ein Gehäuse konstruktiv einfach verhindert.

Das Stützelement ist bevorzugt in seiner Höhe bzw. axialen Erstreckung von der Stirnseite der Endscheibe kleiner als das zugeordnete Kopplungselement. Dies hat den Vorteil, dass die Endscheibe mit geringem Materialeinsatz bei ausreichender Abstützung der Gehäusekopplungselemente hergestellt werden kann. Das Stützelement kann aber auch größer sein als das Kopplungselement.

Die Kopplungselemente werden im Weiteren insbesondere in den Fällen auch als Verbindungssegmente bezeichnet, wenn zusätzlich zu den Kopplungselementen erfindungsgemäß Stützelemente vorgesehen sind. Bevorzugt können die Verbindungssegmente, also Kopplungselemente und Stützelemente, aus dem Material der Endscheibe ausgebildet sein und insbesondere mit dieser einstückig ausgebildet sein. Dies hat den Vorteil, dass die Endscheibe besonders zeiteffizient und kostengünstig in einem Prozess hergestellt werden kann.

Die Endscheibe kann zudem geschlossen oder mit einer Öffnung für einen Fluiddurchtritt ausgeführt sein. Die Öffnung der Endscheibe kann in einer Ausführungsform insbesondere zum Austritt eines Fluids, insbesondere von Flüssigkeit, vorgesehen sein, so dass ein Fluid, insbesondere eine Flüssigkeit, konstruktiv einfach von der Innenseite zur Außenseite strömen kann.

In einer weiteren Ausführungsform kann an der der Stirnseite gegenüberliegenden Seite der Endscheibe ein insbesondere zylindrischer Verbinder oder Steg zur zusätzlichen Zentrierung der Endscheibe vorgesehen sein. Der Verbinder oder Steg kann insbesondere kreisförmig sein. Der Verbinder oder Steg kann sowohl bei geschlossener Endscheibe als auch bei einer Endscheibe mit Öffnung vorgesehen sein.

Erfindungsgemäß sind die Stützelemente, bezogen auf die Verbindungsachse, radial außenliegend zu den Kopplungselementen angeordnet. Dies hat den Vorteil, dass die Stützelemente die Verbindung zwischen Gehäuse und Endscheibe im Kopplungsbereich optimal in Richtung der Krafteinwirkung abstützen können.

Nach einer vorteilhaften Ausgestaltung kann wenigstens eines der Stützelemente jeweils eine Einführschräge zum radialen Einführen der Kopplungselemente in den Einführbereich aufweisen. Zweckmäßigerweise kann eine Einführschräge an einem offenen Ende des Verbindungssegments angeordnet sein. Hierdurch kann bei einer relativen Drehbewegung der beiden Verbindungspartner gegeneinander das Kopplungselement vom Lösebereich in den Kopplungsbereich eingeführt werden, ohne anzustoßen oder zu verkanten.

In einer weiteren Ausführungsform ist der Einführbereich insbesondere an dem Ende des Stützelements angeordnet, welches bezogen auf die Verbindungsachse vorbestimmt im Gegenuhrzeigersinn oder im Uhrzeigersinn zu dem Endanschlag des zu dem Stützelement korrespondierenden Kopplungselements angeordnet ist. Dies hat den Vorteil, dass der Einführbereich konstruktiv einfach, insbesondere auch zusätzlich im Zusammenspiel mit dem Einführbereich des Kopplungselements eine besonderes einfache Einführöffnung und Führung ermöglicht, so dass eine Endscheibe bzw. ein Filterelement mit einer derartigen Endscheibe besonders einfach gewechselt werden kann.

In einer weiteren Ausführungsform weist mindestens ein Stützelement einen Endanschlag auf. Somit weist also mindestens ein Stützelement, bevorzugt mindestens zwei Stützelemente, einen Endanschlag für eine Drehung des jeweiligen Gehäusekopplungselements um die Verbindungsachse auf. Der Endanschlag ist hierbei korrespondierend zum Endanschlag des jeweiligen Kopplungselements angeordnet. Dies hat den Vorteil, dass das Gehäusekopplungselement besonders sicher gekoppelt und abgestützt ist und auch nicht durch unsachgemäße Handhabung beim Tausch des Filterelements durch Ziehen mit großer Krafteinwirkung aus dem Gehäuse herausgezogen werden kann.

Erfindungsgemäß ist das Stützelement kreisbogenförmig. Dies hat den Vorteil, dass das Stützelement optimal an die Form des jeweiligen Kopplungselements angepasst ist und mit diesem optimal bei einer Drehbewegung zusammenwirken kann.

Erfindungsgemäß ist das kreisbogenförmige Stützelement konzentrisch zum korrespondierenden Kopplungselement angeordnet. Dies hat den Vorteil, dass die Stützelemente und die korrespondierenden Kopplungselemente symmetrisch um eine gemeinsame Mitte angeordnet sind und somit denselben Schwerpunkt besitzen und dadurch ein Verkippen des Elements beim Einsetzen konstruktiv einfach vermieden werden kann.

In einer weiteren Ausführungsform ist das Stützelement in Längserstreckung kleiner oder gleich dem Freiraum des korrespondierenden Kopplungselements. Dies hat den Vorteil, dass das Element besonders einfach herstellbar ist.

In einer weiteren Ausführungsform ist das Stützelement in seiner Höhe von der Stirnseite der Endscheibe aus betrachtet kleiner oder gleich der Höhe des Freiraums des korrespondierenden Kopplungselements. Dies hat den Vorteil, dass das Element selbst bei falscher Handhabung zerstörungsfrei gelöst werden kann.

Anschaulich für den Einsatz einer erfindungsgemäßen Endscheibe als Filterelementendscheibe, insbesondere eines Wechselfilterelements, beschrieben, ist es beispielsweise gerade bei sehr schweren Filterelementen, zumal in beladenem Zustand, vorteilhaft, ein Gehäuseteil als Montage-/Demontagehilfe einzusetzen. Dazu ist erfindungsgemäß eine oben beschriebene Verbindungsanordnung auf der Stirnseite der mindestens einen Endscheibe vorgesehen, bei der einer der Verbindungspartner, hier zum Beispiel das erste Gehäuseteil, korrespondierende Gehäusekopplungselemente aufweist, welche mit den Verbindungssegmenten des anderen Verbindungspartners, also der Endscheibe des Filterelements, zusammenwirken. Dazu sind die Verbindungssegmente der Endscheibe, also die Kopplungsbereiche, in alternierender Reihenfolge mit den Lösebereichen vorgesehen, so dass die Gehäusekopplungselemente des ersten Gehäuseteils in einer Steckbewegung in die Lösebereiche der Verbindungssegmente der Endscheibe des Filterelements eingeführt werden können. Durch relative Drehbewegungen von erstem Gehäuseteil und Filterelement gegeneinander lassen sich die Gehäusekopplungselemente in die Kopplungsbereiche einführen und hierdurch koppeln, so dass beide Verbindungspartner lösbar verbunden sind. Durch eine relative Gegendrehbewegung der beiden Verbindungspartner lassen sich die Kopplungselemente wieder von den Kopplungsbereichen in die Lösebereiche überführen, so dass sich die beiden Verbindungspartner durch Auseinanderziehen wieder voneinander lösen lassen.

Nach einem anderen Aspekt der Erfindung wird die Aufgabe gelöst durch ein Filterelement für ein Filtersystem, wobei das Filterelement mindestens eine erfindungsgemäße Endscheibe umfasst und durch die mindestens eine Endscheibe insbesondere mit einem ersten Gehäuseteil eines Filtergehäuses des Filtersystems lösbar verbindbar ist, und wobei eine Verbindungsanordnung zur Herstellung einer Steck-Dreh-Verbindung mittels einer Steck-Drehbewegung bezüglich einer Verbindungsachse zwischen erstem Gehäuseteil und Filterelement als Verbindungspartner vorgesehen ist.

Die Aufgabe wird zudem gelöst durch ein Filtergehäuse, in welchem das Filterelement mit mindestens einer erfindungsgemäßen Endscheibe angeordnet ist, welches ein erstes Gehäuseteil und ein zweites Gehäuseteil aufweist, und wobei eine Verbindungsanordnung zur Herstellung einer Steck-Dreh-Verbindung mittels einer Steck-Drehbewegung bezüglich einer Verbindungsachse zwischen erstem Gehäuseteil und dem Filterelement, insbesondere der mindestens einen Endscheibe als Verbindungspartner vorgesehen ist.

Es wird ein Filtersystem für ein auswechselbares Filterelement für Fluid, insbesondere Flüssigkeit, insbesondere Öl oder Kraftstoff, insbesondere einer Brennkraftmaschine, insbesondere eines Kraftfahrzeugs, vorgeschlagen, wobei das Filterelement, mindestens eine erfindungsgemäße Endscheibe aufweist. Das Filterelement ist in einem Filtergehäuse angeordnet, welches ein erstes Gehäuseteil und ein zweites Gehäuseteil aufweist. Dabei ist anschaulich beschrieben mittels der Endscheibe und korrespondierenden Gehäusekopplungselementen eine Verbindungsanordnung zur Herstellung einer Steck-Dreh-Verbindung mittels einer Steck-Drehbewegung bezüglich einer Verbindungsachse zwischen erstem Gehäuseteil und der Endscheibe des Filterelements als Verbindungspartner vorgesehen, wobei der Gehäuseteil als der eine Verbindungspartner sich axial erstreckende Gehäusekopplungselemente umfasst, und wobei die Endscheibe als der andere der Verbindungspartner Verbindungssegmente umfasst, welche jeweils einen Kopplungsbereich und einen Lösebereich zum Zusammenwirken mit den Kopplungselementen in alternierender Reihenfolge radial umlaufend aufweisen.

Das erfindungsgemäße Filtersystem weist ein Filtergehäuse mit einem ersten Gehäuseteil und einem zweiten Gehäuseteil auf, bei dem vorgesehen ist, das Filterelement umfassend die erfindungsgemäße Endscheibe mit beispielsweise dem ersten Gehäuseteil in das zweite Gehäuseteil einzuführen und zu montieren und bei dem ersten Gehäuseteil auch wieder aus dem zweiten Gehäuseteil zu entnehmen. Gerade bei sehr schweren Filterelementen, zumal in beladenem Zustand, ist es vorteilhaft, ein Gehäuseteil als Montage-/Demontagehilfe einzusetzen. Dazu ist eine Verbindungsanordnung vorgesehen, bei der einer der Verbindungspartner, beispielsweise das erste Gehäuseteil, Gehäusekopplungselemente aufweist, welche mit Verbindungssegmenten der Endscheibe des Filterelements zusammenwirken. Dazu sind in den Verbindungssegmenten der Endscheibe durch die separaten Kopplungselemente Kopplungsbereiche und Lösebereiche in alternierender Reihenfolge vorgesehen, so dass die Kopplungselemente des ersten Gehäuseteils in einer Steckbewegung in die Lösebereiche des Filterelements eingeführt werden können. Durch relative Drehbewegungen von erstem Gehäuseteil und von der Endscheibe des Filterelements gegeneinander lassen sich die Gehäusekopplungselemente in die Kopplungsbereiche der Endscheibe einführen und koppeln, so dass beide Verbindungspartner verbunden sind. Durch eine relative Gegendrehbewegung der beiden Verbindungspartner lassen sich die Gehäusekopplungselemente wieder von den Kopplungsbereichen in die Lösebereiche überführen, so dass sich die beiden Verbindungspartner durch Auseinanderziehen wieder voneinander lösen lassen.

Nach einer vorteilhaften Ausgestaltung können die Gehäusekopplungselemente durch eine Steckbewegung des ersten Gehäuseteils in Richtung der Verbindungsachse in den Lösebereich einführbar sein und durch eine relative Drehbewegung zwischen erstem Gehäuseteil und Filterelement in den Kopplungsbereich überführbar sein. Weiter kann das erste Gehäuseteil von der Endscheibe des Filterelements dadurch lösbar sein, dass die Gehäusekopplungselemente durch eine relative Drehbewegung in Gegenrichtung zur ersten Drehbewegung zwischen erstem Gehäuseteil und Filterelement von dem Kopplungsbereich in den Lösebereich überführbar sind und durch eine relative Zugbewegung zwischen erstem Gehäuseteil und Filterelement in Richtung der Verbindungsachse aus dem Lösebereich lösbar sind.

Vorteilhaft ist so vorgesehen, dass das erste Gehäuseteil mit mittels der Endscheibe verbundenem Filterelement auf das zweite Gehäuseteil aufgesetzt wird, so dass das Filterelement im Inneren des Filtergehäuses angeordnet ist und dann das Filtergehäuse durch eine Schraubbewegung des ersten Gehäuseteils gegen das zweite Gehäuseteil verschlossen wird. Durch diese Schraubbewegung lösen sich die Gehäusekopplungselemente aus den Kopplungsbereichen, so dass die Verbindung erstes Gehäuseteil und Filterelement wieder gelöst ist. Damit sitzt das Filterelement frei in seiner Halterung in dem Filtergehäuse und ist fixiert. Soll das Filterelement getauscht werden, so wird das erste Gehäuseteil beispielsweise von dem zweiten Gehäuseteil abgeschraubt. Durch diese Schraubbewegung in Gegenrichtung zur Eindrehbewegung werden die Gehäusekopplungselemente von den Lösebereichen in die Kopplungsbereiche überführt, so dass das Filterelement wieder mittels der Endscheibe mit dem ersten Gehäuseteil verbunden ist. Dadurch kann das Filterelement mit dem ersten Gehäuseteil aus dem zweiten Gehäuseteil herausgezogen werden und außen dann durch eine relative Drehbewegung zwischen erstem Gehäuseteil und Filterelement von dem ersten Gehäuseteil gelöst werden, so dass mit dem ersten Gehäuseteil ein neues Filterelement eingesetzt werden kann.

Nach einer vorteilhaften Ausgestaltung kann die Verbindungsanordnung so vorgesehen sein, dass durch eine Drehbewegung zum Lösen des ersten Gehäuseteils von dem zweiten Gehäuseteil das erste Gehäuseteil und das Filterelement verbindbar sind. Das Filterelement ist so, wenn es im Filtergehäuse während des Betriebs eingesetzt ist, nicht mit dem ersten Gehäuseteil verbunden. Wird jedoch das erste Gehäuseteil von dem zweiten Gehäuseteil durch eine Schraubbewegung gelöst, so können durch diese Drehbewegung die Kopplungselemente wieder in die Kopplungsbereiche der Verbindungssegmente geführt werden und dort koppeln. Hierdurch sind das erste Gehäuseteil und das Filterelement derart verbunden, so dass das Filterelement mit dem ersten Gehäuseteil aus dem zweiten Gehäuseteil herausgezogen werden kann.

Die Gehäusekopplungselemente und die Verbindungssegmente der Endscheibe sind jeweils auf Kreisen um die Verbindungsachse angeordnet. Die mindestens zwei Verbindungssegmente der Endscheibe sind dabei, wie oben beschrieben, kreisbogenförmig ausgebildet. Auf diese Weise wird sichergestellt, dass die Gehäusekopplungselemente bei einer Drehbewegung des ersten Gehäuseteils wahlweise in die Kopplungsbereiche oder in die Lösebereiche der Endscheibe des Filterelements eingedreht werden können. Außerdem kann so beispielsweise die Aufschraubbewegung beim Lösen des ersten Gehäuseteils vom zweiten Gehäuseteil zum Überführen der Kopplungselemente von dem Lösebereich in den Kopplungsbereich genutzt werden.

Nach einer vorteilhaften Ausgestaltung können sowohl die Gehäusekopplungselemente und die Verbindungssegmente kreisbogenförmig und auch die Gehäusekopplungselemente jeweils zueinander beabstandet angeordnet sein. Durch die beiderseitige Anordnung in beabstandeten Kreisbögen können die freien Bereiche zwischen den Kopplungsbereichen günstig als Lösebereiche zum Einführen und Herausziehen der Kopplungselemente aus den Lösebereichen und damit zum Verbinden oder Lösen des Filterelements von dem ersten Gehäuseteil genutzt werden. Damit braucht auch keine genaue Ausrichtung von Filterelement zu erstem Gehäuseteil angegeben werden, um die Kopplungselemente in die Lösebereiche einzuführen, da die verschiedenen Verbindungssegmente gleich aufgebaut sind und so das erste Gehäuseteil nur jeweils um den Winkelbereich eines Kreisbogens weitergedreht werden muss, um die Kopplungselemente in die Lösebereiche einführen zu können.

Nach einer vorteilhaften Ausgestaltung können wenigstens zwei Gehäusekopplungselemente vorgesehen sein, wobei die Zahl an Gehäusekopplungselementen kleiner oder gleich einer Zahl an Verbindungssegmenten der Endscheibe sein kann. Aus Symmetriegründen können wenigstens zwei Gehäusekopplungselemente vorgesehen werden, um das erste Gehäuseteil mit der Endscheibe des Filterelements zu verbinden und so das Filterelement sicher in das zweite Gehäuseteil einsetzen und wieder entnehmen zu können. Die Zahl an Gehäusekopplungselementen sollte nicht größer als die Anzahl der Verbindungssegmente sein, damit für alle Gehäusekopplungselemente Lösebereiche und Kopplungsbereiche zur Aufnahme zur Verfügung stehen. Gerade bei schweren Filterelementen ist es vorteilhaft, wenn geradzahlig mehr, insbesondere vier Gehäusekopplungselemente und hierfür korrespondierend zwei oder vier Verbindungssegmente vorgesehen sind, damit das erste Gehäuseteil das Gewicht des Filterelements sicher tragen kann. Bei einem großen Durchmesser der Endscheibe finden sich die Verbindungspartner besser, wenn es sich um mehr als zwei Verbindungssegmente handelt.

Erfindungsgemäß sind die Gehäusekopplungselemente auf einer Innenseite des ersten Gehäuseteils angeordnet. Zweckmäßig sind die Gehäusekopplungselemente im Inneren des ersten Gehäuseteils, welches insbesondere als Gehäusedeckel oder auch alternativ als Gehäuseflansch oder auch Filterkopf eingesetzt werden kann, angeordnet. Als Werkstoff für das Filtergehäuse kann ein Kunststoff, wie beispielsweise Polyamid, vorgesehen sein, beispielsweise glasfaserverstärktes Polyamid wie PA6 GF30. Aus diesem Material können auch die Gehäusekopplungselemente ausgebildet sein, so dass die Gehäusekopplungselemente bevorzugt auch mit dem ersten Gehäuseteil einstückig ausgebildet sein können, um effizient und kostengünstig in einem Prozess hergestellt zu werden. Alternativ kann auch ein Filtergehäuse aus Metall vorgesehen sein, so dass die Kopplungselemente beispielsweise aus Aluminium ausgebildet sein können.

Die Gehäusekopplungselemente weisen radial ausgerichtete Hintergriffelemente auf. Durch an den Gehäusekopplungselementen angeordnete Hintergriffelemente werden die Gehäusekopplungselemente mit den Verbindungssegmenten der Endscheibe gekoppelt, um so das erste Gehäuseteil und das Filterelement sicher zu verbinden, so dass das Filterelement beispielsweise beim Einsetzen oder auch beim Wechseln des Filterelements zumindest zeitweise zusammen mit dem ersten Gehäuseteil gehandhabt werden kann.

Nach einer vorteilhaften Ausgestaltung können die Gehäusekopplungselemente wenigstens in radialer Richtung elastisch ausgebildet sein. Auf diese Weise ist ein sicheres Einführen und Koppeln mit den Verbindungssegmenten möglich. Die elastische Ausführung der Kopplungselemente begünstigt dabei einen gewissen Toleranzausgleich, so dass das Filterelement mit den Gehäusekopplungselementen des ersten Gehäuseteils auch bei größerem Gewicht des Filterelements sicher gehalten wird.

Die Verbindungssegmente der Endscheibe weisen im Kopplungsbereich mindestens zwei Kopplungselemente und dazu korrespondierende, radial und axial zu dem jeweils korrespondierenden Kopplungselement angeordnete Stützelemente auf, wobei die beiden Verbindungssegmente jeweils radial und axial beabstandet angeordnet sind und hierdurch konstruktiv einfach einen Einführbereich für die Gehäusekopplungselemente ausbilden. Das jeweilige Gehäusekopplungselement mit seinem Hintergriffelement kann so günstig zwischen die beiden Stützelemente der Endscheibe, welche im Kopplungsbereich des Verbindungssegments angeordnet sind, eingeführt werden. Das Hintergriffelement kann sich so an einem der beiden Stützelemente in axialer Richtung verhaken, während das Kopplungselement auf der dem Hintergriffelement entgegengesetzten Seite von dem anderen Stützelement abgestützt wird, damit es in radialer Richtung nicht ausweichen kann und so das Filterelement durch die Kopplungselemente sicher gehalten werden kann.

Nach einem weiteren Aspekt der Erfindung wird ein Filterelement für ein Filtersystem vorgeschlagen, umfassend einen Filterkörper mit wenigstens einer erfindungsgemäßen Endscheibe, wobei das Filterelement mit einem ersten Gehäuseteil eines Filtergehäuses des Filtersystems lösbar verbindbar ist. Dabei ist eine Verbindungsanordnung zur Herstellung einer Steck-Dreh-Verbindung mittels einer Steck-Drehbewegung bezüglich einer Verbindungsachse zwischen dem ersten Gehäuseteil und der Endscheibe des Filterelements als Verbindungspartner vorgesehen, wobei das Gehäuseteil als der eine Verbindungspartner sich axial erstreckende Gehäusekopplungselemente umfasst, und wobei die Endscheibe als der andere Verbindungspartner Kopplungselemente bzw. Verbindungssegmente umfasst, welche jeweils einen Kopplungsbereich und einen Lösebereich in alternierender Reihenfolge radial umlaufend aufweisen zum Zusammenwirken mit den jeweiligen Gehäusekopplungselementen.

Gerade bei sehr schweren Filterelementen, zumal in beladenem Zustand, ist es vorteilhaft, ein Gehäuseteil als Montagehilfe einzusetzen. Dazu ist eine Verbindungsanordnung vorgesehen, bei der einer der Verbindungspartner, beispielsweise das erste Gehäuseteil, Gehäusekopplungselemente aufweist, welche mit Verbindungssegmenten des anderen Verbindungspartners, also der Endscheibe des Filterelements, zusammenwirken. Dazu sind zwischen den separaten, zueinander beabstandeten Verbindungssegmenten der Endscheibe, also den Kopplungsbereichen, Lösebereiche in alternierender Reihenfolge vorgesehen, so dass die Gehäusekopplungselemente des ersten Gehäuseteils in einer Steckbewegung in die Lösebereiche der Endscheibe des Filterelements eingeführt werden können. Durch relative Drehbewegungen von erstem Gehäuseteil und vom Filterelement gegeneinander lassen sich die Gehäusekopplungselemente in die Kopplungsbereiche der Endscheibe einführen und insbesondere koppeln, so dass beide Verbindungspartner verbunden sind. Durch eine relative Gegendrehbewegung der beiden Verbindungspartner lassen sich die Gehäusekopplungselemente wieder von den Kopplungsbereichen in die Lösebereiche überführen, so dass sich die beiden Verbindungspartner durch Auseinanderziehen konstruktiv einfach wieder voneinander lösen lassen.

Günstige Ausgestaltungen und Vorteile der Erfindung ergeben sich aus den weiteren Ansprüchen, der Beschreibung und der Zeichnung.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

**Es zeigen beispielhaft:**
- Fig. 1: eine isometrische Darstellung einer Stirnseite einer Endscheibe in einer nicht erfindungsgemäßen Ausführung;
- Fig. 2: eine isometrische Darstellung der nicht erfindungsgemäßen Endscheibe aus Fig. 1 in der Draufsicht;
- Fig. 3: eine isometrische Darstellung einer Stirnseite der Endscheibe mit Darstellung der Verbindungssegmente;
- Fig. 4: eine weitere isometrische Darstellung der Endscheibe mit Darstellung der Verbindungssegmente nach einem weiteren Ausführungsbeispiel;
- Fig. 5: eine weitere isometrische Darstellung der Endscheibe gemäß einem nicht erfindungsgemäßen Ausführungsbeispiel ohne Stützelemente;
- Fig. 6: eine weitere isometrische Darstellung der Endscheibe gemäß einem nicht erfindungsgemäßen Ausführungsbeispiel ohne Stützelemente;
- Fig. 7: ein erstes Gehäuseteil eines Filtersystems mit verbundenem Filterele-ment mit der Endscheibe nach einem Ausführungsbeispiel der Erfindung im Längsschnitt;
- Fig. 8: eine Draufsicht auf die Innenseite des ersten Gehäuseteils nach Fig. 7 mit den Gehäusekopplungselementen;
- Fig. 9: ein Filtersystem mit eingesetztem Filterelement nach einem weiteren Ausführungsbeispiel der Erfindung im Längsschnitt;
- Fig. 10: eine Detailansicht des Filtersystems nach Fig. 9 mit Fokus auf die Ver-bindungsanordnung;
- Fig. 11: eine Draufsicht auf die Innenseite eines ersten Gehäuseteils des Filter-systems nach Fig. 7 mit den Gehäusekopplungselementen;
- Fig. 12: eine weitere isometrische Darstellung der Endscheibe nach einem nicht erfindungsgemäßen Ausführungsbeispiel ohne Stützelemente;
- Fig. 13: eine isometrische Darstellung der Endscheibe nach einem nicht erfin-dungsgemäßen Ausführungsbeispiel ohne Stützelemente in der Drauf-sicht;
- Fig. 14: eine weitere isometrische Darstellung der Endscheibe nach einem weiteren nicht erfindungsgemäßen Ausführungsbeispiel ohne Stützele-mente; und
- Fig. 15: eine weitere isometrische Darstellung der Endscheibe nach einem weiteren nicht erfindungsgemäßen Ausführungsbeispiel ohne Stützele-mente.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

Wenn im Folgenden von "axial", "radial", "koaxial" oder "umfangsmäßig" die Rede ist, so bezieht sich dies, sofern nicht anders erwähnt, auf die Verbindungsachse.

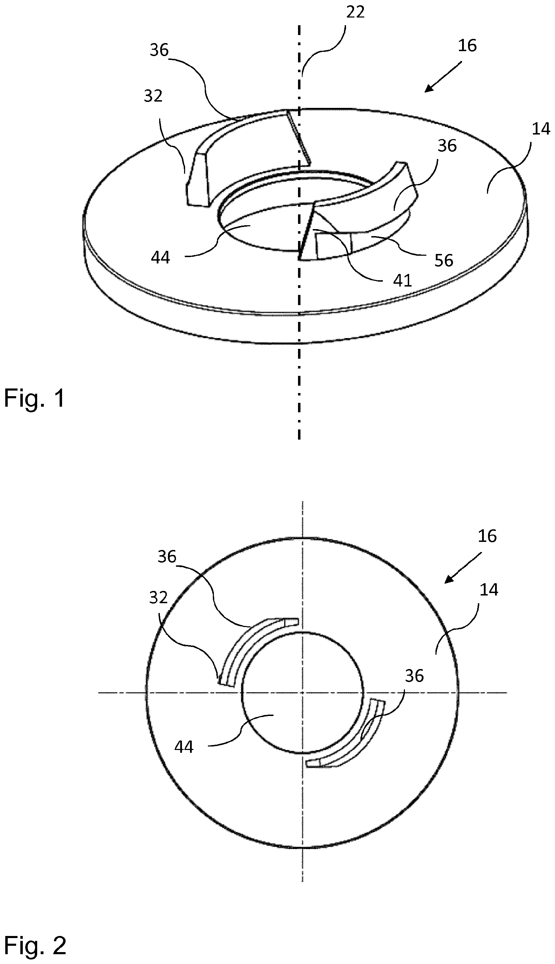

Figur 1 zeigt eine isometrische Darstellung einer Stirnseite 14 einer Endscheibe 16 in einer nicht erfindungsgemäßen Ausführungsform. Die Endscheibe 16 weist auf der Stirnseite 14 mindestens zwei separate, kreisbogenförmige Kopplungselemente 36 auf, die zum axialen Hintergriff 56 für ein korrespondierendes Gehäusekopplungselement 26 ausgebildet sind. Die Kopplungselemente 36 sind bezüglich einer radialen Verbindungsachse 22 einander gegenüberliegend angeordnet und es ist mindestens ein Endanschlag 32 mindestens einem Kopplungselement 36 zugeordnet. Der Endanschlag 32 kann zu dem Kopplungselement 36 benachbart auf der Endscheibe angeordnet sein (nicht gezeigt) oder, wie in Figur 1 gezeigt, kann ein Kopplungselement den Endanschlag 32 aufweisen. Der jeweilige Endanschlag 32 kann insbesondere auch, wie in Figur 1 gezeigt, an einem Ende des Kopplungselements 36 angeordnet sein. Der Endanschlag 32 kann beispielsweise von der Verbindungsachse 22 aus betrachtet am Außenumfang des Kopplungselements 36 angeordnet sein. Der Endanschlag 32 kann auch einstückig mit dem Kopplungselement 36 ausgebildet sein. Der Endanschlag 32 kann insbesondere als Vorsprung oder Nase ausgebildet sein. Der Endanschlag 32 kann sich auch auf der Stirnseite der Endscheibe 16 befinden und kann zu dem Kopplungselement 36 insbesondere im Gegenuhrzeigersinn oder im Uhrzeigersinn benachbart angeordnet sein, insbesondere kann der Endanschlag 32 konzentrisch zum Kopplungselement 36 angeordnet sein und bildet den Anschlag für das korrespondierende Gehäusekopplungselement 26. Der Endanschlag 32 kann als Vorsprung oder Nase oder insbesondere tangential zur Querplanfläche des Kopplungselements 36 und von der Verbindungsachse 22 radial nach außen gerichtet ausgebildet sein. In Figur 1 ist der Endanschlag 32 an einem Kopplungselement 36 tangential zur Querplanfläche des Kopplungselements 36 angeordnet gezeigt. Der Endanschlag 32 ist in Höhe des Hintergriffs 56 für das Gehäusekopplungselement 26 bzw. das Hintergriffelement 28 des Gehäusekopplungselements 26 als Anschlag für das korrespondierende Gehäusekopplungselement 26 angeordnet. Die Endscheibe 16 ist in Figur 1 mit einer Öffnung 44 dargestellt, kann aber auch geschlossen sein. Die Kopplungselemente 36 können auch beide einen Endanschlag 32 aufweisen. Mindestens ein Kopplungselement 36 kann eine Eindrehschräge 41 aufweisen.

Figur 2 zeigt eine isometrische Darstellung der Endscheibe in einer nicht erfindungsgemäßen Ausführungsform gemäß Figur 1 in der Draufsicht, die Kopplungselemente 36 sind von der Außenkontur 46 der Endscheibe 16 beabstandet um die Öffnung 44 angeordnet gezeigt. Der Abstand der beiden Kopplungselemente voneinander ist für die in Figur 2 gezeigte Ausführungsform mit zwei Kopplungselementen so gewählt, dass ein jeweiliger Lösebereich 52 gleich groß ist wie ein jeweiliger Kopplungsbereich 50. Die bei zwei Kopplungselementen 36 derart gebildeten vier Kreisbögen sind somit gleich groß und in vier Kreisbogenabschnitte unterteilt, wobei die beiden Kopplungselemente 36 den jeweiligen Kopplungsbereich bilden. Dies hat den Vorteil, dass der Drehwinkel beim Rausschrauben, somit der Eingriffswinkel, optimal maximal 90° sein kann, bevor die Endscheibe 16 vollständig gekoppelt ist. Bei der Wahl gleich großer Lösebereiche 52 kann somit konstruktiv einfach ein optimiertes Verhältnis von Eingriffsdrehbewegung und axialer Verschiebung des Gehäuseteils, beispielsweise des Gehäusedeckels, durch die Gewindesteigung gewählt werden. Der Endanschlag 32 ist in Figur 2 als Vorsprung oder Nase ausgebildet dargestellt.

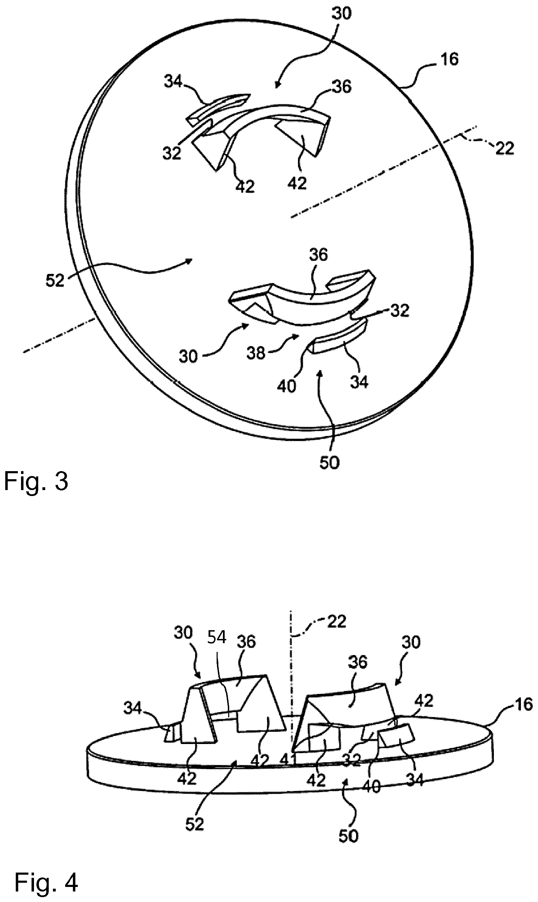

Figur 3 zeigt eine isometrische Darstellung einer Stirnseite 14 der Endscheibe 16 mit Darstellung von Verbindungssegmenten 30 in einer Sicht von oben. Die Bezeichnung Verbindungssegmente 30 umfasst hierbei die Kopplungselemente 36 und Stützelemente 34. In Figur 4 ist die Endscheibe 16 gemäß Figur 3 in nahezu horizontaler Lage dargestellt.

Die gezeigte Endscheibe 16 für ein Filterelement weist auf der Stirnseite 14 zwei separate, zueinander beabstandete, kreisbogenförmige Kopplungselemente 36 mit jeweils einem Endanschlag 32 auf, wobei der Endanschlag 32 an einem Ende des Kopplungselements 36 angeordnet ist. Die zwei Kopplungselemente 36 sind bezüglich einer radialen Verbindungsachse 22 punktsymmetrisch zueinander angeordnet. Die Kopplungselemente 36 können so bei einer Drehbewegung um die Verbindungsachse 22 um einen rotatorischen Winkel, der einem Kreisbogen entspricht, jeweils wieder mit korrespondierend angeordneten mindestens zwei Gehäusekopplungselementen ineinandergreifen bzw. hintergreifen. Die Kopplungselemente 36 der Endscheibe 16 weisen jeweils zwei Halter 42 auf. Die Kopplungselemente 36 können zwischen den beiden Haltern 42 entlang der Längserstreckung des jeweiligen Kopplungselements 36 einen Freiraum 54 aufweisen (in Figur 4 gezeigt). Ein Halter 42 des jeweiligen Kopplungselements 36 weist eine Eindrehschräge 41 auf, insbesondere eine Eindrehschräge 41, welche bezogen auf die Verbindungsachse 22 zum Endanschlag 32 des Kopplungselements 36 im Gegenuhrzeigersinn (gezeigt) oder im Uhrzeigersinn (nicht gezeigt) angeordnet ist.

Die Kopplungselemente 36 sind von der Außenkontur der Endscheibe 16 beabstandet angeordnet.

Die Endanschläge 32 der Kopplungselemente 36 sind bezogen auf die radiale Verbindungsachse 22 zueinander im Gegenuhrzeigersinn (gezeigt) oder im Uhrzeigersinn (nicht gezeigt) angeordnet.

Die Stützelemente 34 sind bezogen auf die Verbindungsachse 22 radial außenliegend zu den Kopplungselementen 36 angeordnet. Die Stützelemente 34 weisen bevorzugt einen Einführbereich 38 mit einer Einführschräge 40 auf. Der Einführbereich 38 befindet sich insbesondere an dem Ende des Stützelements 34, welches bezogen auf die Verbindungsachse 22 im Gegenuhrzeigersinn oder (auch nicht gezeigt) im Uhrzeigersinn zu dem Endanschlag 32 des zu dem Stützelement 34 korrespondierenden Kopplungselement 36 angeordnet ist. Das Stützelement 34 ist kreisbogenförmig ausgebildet. Das Stützelement 34 ist konzentrisch zum korrespondierenden Kopplungselement 36 angeordnet. Das Stützelement 34 ist bevorzugt in seiner Höhe bzw. axialen Erstreckung von der Stirnseite 14 der Endscheibe 16 kleiner als das zugeordnete Kopplungselement 36. Dies hat den Vorteil, dass die Endscheibe 16 mit geringem Materialeinsatz bei ausreichender Abstützung der Gehäusekopplungselemente 26 hergestellt werden kann. Das Stützelement 34 kann aber auch größer sein als das Kopplungselement 36, um eine besonders gute Stützleistung zu erzielen.

Figur 4 zeigt eine isometrische Darstellung einer Stirnseite 14 der Endscheibe 16 basierend auf der Endscheibe gemäß Figur 3 nach einem weiteren Ausführungsbeispiel. Die Endscheibe 16 umfasst zusätzlich eine Öffnung 44. Diese Öffnung 44 ist bevorzugt konzentrisch zu den Kopplungselementen 36 angeordnet. Die Öffnung kann zusätzliche Verbindungselemente, beispielsweise zur Verbindung mit einem Filterkopf, aufweisen.

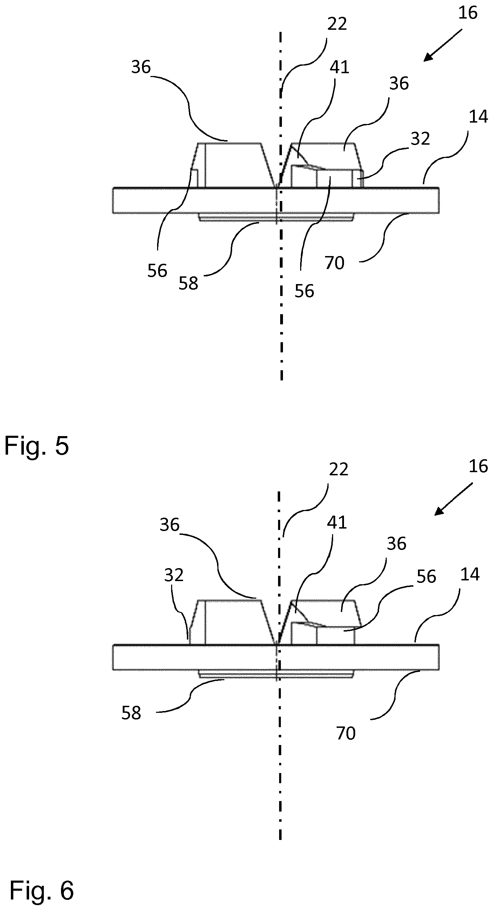

Figur 5 und Figur 6 zeigen isometrische Darstellungen der Endscheibe 16 in Seitenansicht gemäß weiteren nicht erfindungsgemäßen Ausführungsbeispielen.

Figur 5 zeigt die Endscheibe 16 in einer nicht erfindungsgemäßen Ausführungsform mit einem Kopplungselement 36 mit einem Hintergriff 56, aufweisend einen Endanschlag 32, welcher tangential zur Querplanfläche des Kopplungselements 36 und von der Verbindungsachse 22 radial nach außen gerichtet ausgebildet ist. Die Endscheibe umfasst zudem einen zylindrischen Verbinder oder Steg 58 auf der der Stirnseite 14 gegenüberliegenden Seite 70 der Endscheibe 16. Mittels des Verbinders oder Stegs 58 kann die Endscheibe 16 zusätzlich optimal zentriert werden.

Die Endscheibe 16 in Figur 6 zeigt einen zum Kopplungselement 36 benachbarten Endanschlag 32 an einer Stirnseite des Kopplungselements 36 und den Hintergriff 56 sowie den Verbinder oder Steg 58.

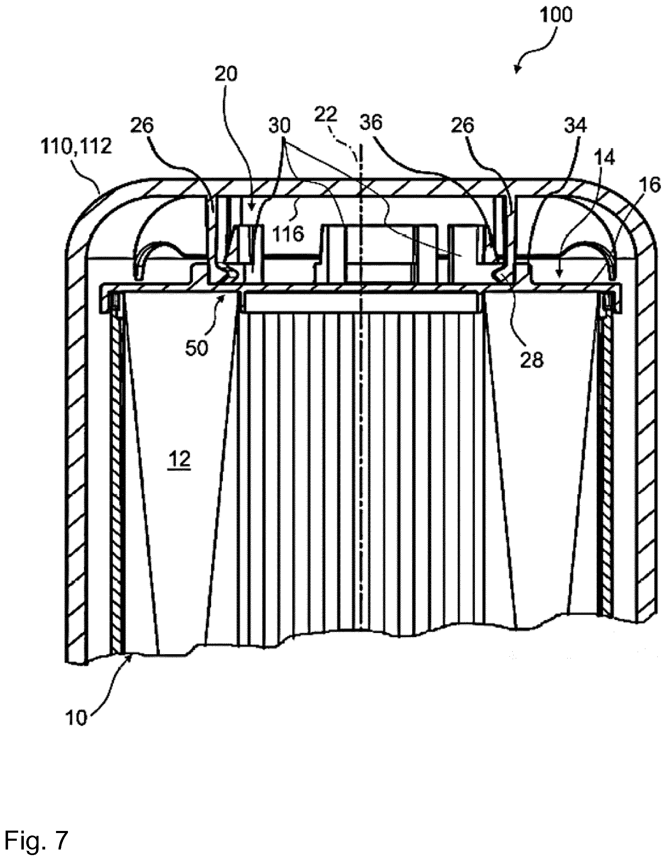

Figur 7 zeigt im Längsschnitt ein erstes Gehäuseteil 112 eines Filtersystems 100 mit verbundenem Filterelement 10 mit einer Endscheibe 16 nach einem Ausführungsbeispiel der Erfindung. Das auswechselbare Filterelement 10 für Fluid, insbesondere Flüssigkeit, insbesondere Öl oder Kraftstoff, insbesondere einer Brennkraftmaschine, insbesondere eines Kraftfahrzeugs, weist einen hohlzylinderförmigen Filterkörper 12 auf, der von dem Fluid beispielsweise radial durchströmt wird und in einem Filtergehäuse 110 angeordnet ist, welches ein erstes Gehäuseteil 112 und ein zweites Gehäuseteil 114 aufweist, wobei das zweite Gehäuseteil 114 in Figur 7 nicht dargestellt ist. Die Durchströmung des Filterkörpers 12 kann von innen nach außen oder auch von außen nach innen erfolgen. Die beiden Gehäuseteile 112, 114 können beispielsweise durch eine Schraubverbindung verbunden sein. Es ist eine Verbindungsanordnung 20 zur Herstellung einer Steck-Dreh-Verbindung mittels einer Steck-Drehbewegung bezüglich einer Verbindungsachse 22 zwischen dem ersten Gehäuseteil 112 und dem Filterelement 10 bzw. dessen Endscheibe 16 als Verbindungspartner vorgesehen. Der eine der Verbindungspartner, in dem dargestellten Ausführungsbeispiel das erste Gehäuseteil 112, umfasst sich axial erstreckende Gehäusekopplungselemente 26, während der andere der Verbindungspartner, in dem dargestellten Ausführungsbeispiel das Filterelement 10, die Endscheibe 16 mit Verbindungssegmenten 30, also Kopplungselementen 36 und zusätzlich Stützelementen 34, umfasst, welche jeweils einen Kopplungsbereich 50 und einen Lösebereich 52 zum Zusammenwirken mit den Gehäusekopplungselementen 26 in alternierender Reihenfolge radial umlaufend aufweisen. Die Verbindungsanordnung 20 ist so vorgesehen, dass durch eine Drehbewegung zum Lösen des ersten Gehäuseteils 112 von dem zweiten Gehäuseteil 114 das erste Gehäuseteil 112 und das Filterelement 10 bzw. die Endscheibe 16 des Filterelements 10 verbunden werden.

Wie Figur 7 zu entnehmen ist, sind die Gehäusekopplungselemente 26 auf einer Innenseite 116 einer Stirnfläche des ersten Gehäuseteils 112 und die Verbindungssegmente 30 korrespondierend auf einer Stirnseite 14 der Endscheibe 16 des Filterelements 10 angeordnet. Die Gehäusekopplungselemente 26 weisen radial nach innen ausgerichtete Hintergriffelemente 28 auf und können wenigstens in radialer Richtung elastisch ausgebildet sein, so dass die Gehäusekopplungselemente 26 beim Einführen in die Verbindungssegmente 30 und Koppeln einen Toleranzausgleich bewirken können. Hiermit kann die Verbindung auf einfache Weise und ohne übermäßigen Kraftaufwand durch eine Steck-Drehbewegung der beiden Verbindungspartner gegeneinander hergestellt werden.

Die Verbindungssegmente 30 der Endscheibe 16 weisen im Kopplungsbereich 50 mindestens zwei Kopplungselemente 36 und dazu konzentrisch angeordnete Stützelemente 34 jeweils als Verbindungssegment 30 auf, wobei in einer konstruktiv besonders einfachen Ausführungsform nur mindestens zwei Kopplungselemente 36 als Verbindungssegmente 30 vorgesehen sind, wobei die jeweiligen Verbindungssegmente 30 von dem anderen Verbindungssegment 30 jeweils radial und axial beabstandet angeordnet ist. Das jeweilige Kopplungselement 36 und das dazu korrespondierende Stützelement 34 sind zueinander radial und axial beabstandet angeordnet und das Stützelement 34 ist radial und axial zu dem mindestens einen Endanschlag 32 beabstandet angeordnet. Die genaue Anordnung der Stützelemente 34, 36 zueinander ist insbesondere in Figuren 3 und 4 gut zu erkennen. Zwischen den beiden Stützelementen 34, 36 ist so ein Einführbereich 38 ausgebildet, in welchen das Gehäusekopplungselement 26 mit seinem Hintergriffelement 28 eingreifen kann.

In Figur 7 ist das Filterelement 10 mit dem ersten Gehäuseteil 112 verbunden, da die Gehäusekopplungselemente 26 im Kopplungsbereich 50 zwischen dem Stützelement 34 und dem Kopplungselement 36 der Endscheibe 16 verrastet sind. Dadurch kann das Filterelement 10 mit dem ersten Gehäuseteil 112 in das (nicht dargestellte) zweite Gehäuseteil 114 eingeführt oder aus diesem entnommen werden.

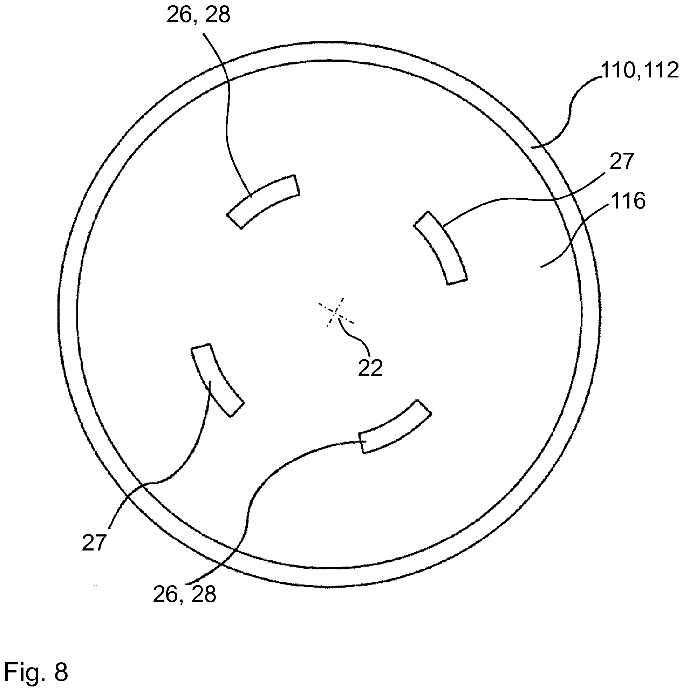

Figur 8 zeigt eine Draufsicht auf die Innenseite 116 der Stirnfläche des ersten Gehäuseteils 112 nach Figur 7 mit den Kopplungselementen 26.

Es sind zweckmäßigerweise wenigstens zwei Gehäusekopplungselemente 26 vorgesehen, wobei die Zahl an Gehäusekopplungselementen 26 kleiner oder gleich der Zahl an Kopplungselementen 36 der Endscheibe ist. Die Gehäusekopplungselemente 26 weisen Hintergriffelemente 28 auf. Vorteilhaft sind beispielsweise zwei Kopplungselemente 26 mit Hintergriffelementen 28 und zwei Gehäusestützelemente 27 vorgesehen, diese koppeln mit mindestens zwei Verbindungssegmenten 30 der Endscheibe 16, umfassend jeweils ein Kopplungselement 36 und in erfindungsgemäßer Ausgestaltung zusätzlich ein Stützelement 34 (wie in den Figuren 3 und 4 dargestellt).

Die Gehäusekopplungselemente 26, 28 können durch eine Steckbewegung des ersten Gehäuseteils 112 in Richtung der Verbindungsachse 22 in den Lösebereich 52 eingeführt werden und durch eine relative Drehbewegung zwischen erstem Gehäuseteil 112 und Filterelement 10 in den Kopplungsbereich 50 überführt werden, so dass die Hintergriffelemente 28 an den Kopplungselementen 36 hintergreifen können, während die Kopplungselemente 26 von der anderen Seite durch die Stützelemente 34 so abgestützt werden, dass sie unter Belastung nicht ausweichen können. Die Kopplungselemente 36 weisen beispielsweise einen Freiraum 54 zwischen den Haltern 42 (Figur 4) auf, welcher von den Hintergriffelementen 28 hintergriffen werden kann. Damit sind das erste Gehäuseteil 112 und das Filterelement 10 sicher und zuverlässig miteinander verbunden.

Das erste Gehäuseteil 112 ist von dem Filterelement 10 lösbar, indem die Kopplungselemente 26 durch eine relative Drehbewegung in Gegenrichtung zwischen erstem Gehäuseteil 112 und Filterelement 10 von dem Kopplungsbereich 50 in den Lösebereich 52 überführt werden und durch eine relative Zugbewegung zwischen erstem Gehäuseteil 112 und Filterelement 10 in Richtung der Verbindungsachse 22 aus dem Lösebereich 52 gelöst werden.

Die Stützelemente 34 weisen jeweils eine Einführschräge 40 zum radialen Einführen der Gehäusekopplungselemente 26 in den Einführbereich 38 auf. Die Stützelemente 34 weisen außerdem an der Verbindung zu den Haltern 42 der Kopplungselemente 36 jeweils den Endanschlag 32 für eine Drehung des Gehäusekopplungselements 26 um die Verbindungsachse 22 auf. Damit können die Gehäusekopplungselemente 26 in dem Kopplungsbereich 50 gehalten werden, wenn das erste Gehäuseteil 112 weiter aufgedreht wird, um von dem zweiten Gehäuseteil 114 abgeschraubt zu werden, so dass erstes Gehäuseteil 112 und Filterelement 10 verbunden bleiben und das Filterelement 10 mit dem ersten Gehäuseteil 112 herausgezogen werden kann. Außerdem kann durch den Endanschlag 32 verhindert werden, dass das Gehäusekopplungselement 26 beim Verschrauben des ersten Gehäuseteils 112 mit dem zweiten Gehäuseteil 114 von dem Lösebereich 52, in den es durch das Verschrauben gebracht wurde, wieder in einen Kopplungsbereich 50 gerät. Dadurch kann das Filterelement 10 im eingesetzten Zustand bei verschlossenem Filtergehäuse 110 gelöst von dem ersten Gehäuseteil 112 bleiben, so dass das Filterelement 10 sicher in seiner Halterung im Filtergehäuse 110 und in seinen Dichtungen eingesetzt bleiben kann.

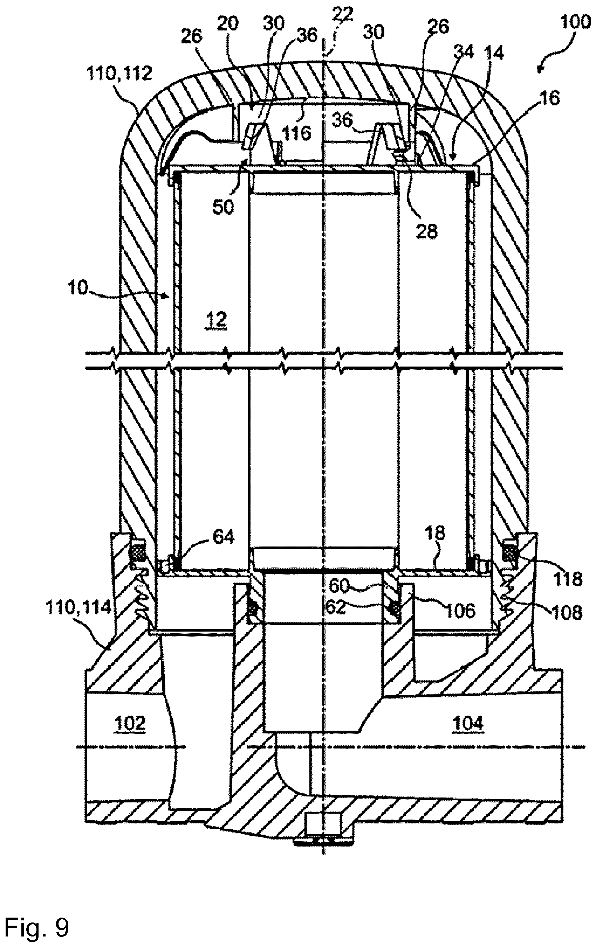

Figur 9 zeigt ein Filtersystem 100 mit eingesetztem Filterelement 10 nach einem weiteren Ausführungsbeispiel der Erfindung im Längsschnitt.

Das auswechselbare Filterelement 10 weist einen hohlzylinderförmigen Filterkörper 12 auf, der von dem Fluid radial, beispielsweise von außen nach innen oder von innen nach außen durchströmt, wird und in einem Filtergehäuse 110 angeordnet ist, welches ein erstes Gehäuseteil 112 und ein zweites Gehäuseteil 114 aufweist. Die beiden Gehäuseteile 112, 114 sind durch eine Schraubverbindung 108 verbunden und mit einer rundum laufenden Dichtung 118 gegen die Umgebung abgedichtet. Das Filterelement 10 ist beim Einsetzen in das Filtergehäuse 110 mit einem Stutzen 60 in eine Aufnahme 106 des zweiten Gehäuseteils 114 eingeführt, wobei der Stutzen 60 mit einer rundum laufenden Dichtung 62 gegen die Aufnahme 106 abgedichtet ist. Der Stutzen 60 dient zum Ableiten oder Einleiten des gefilterten Fluids durch den Anschluss 104 des Filtergehäuses 110. Zur radialen Positionierung und Führung des Filterelements 10 im ersten Gehäuseteil 112 weist das Filterelement 10 an der zweiten Endscheibe 18 radial außenliegende Zentrierelemente 64 auf, welche das Filterelement 10 gegen das erste Gehäuseteil 112 abstützen.

Es ist eine Verbindungsanordnung 20 zur Herstellung einer Steck-Dreh-Verbindung mittels einer Steck-Drehbewegung bezüglich einer Verbindungsachse 22 zwischen dem ersten Gehäuseteil 112 und dem Filterelement 10 als Verbindungspartner vorgesehen. Die Anordnung und Ausführung der Kopplungselemente 26 und Verbindungssegmente 30 der Endscheibe 16 ist im Wesentlichen wie bei dem in Figur 7 dargestellten Ausführungsbeispiel, so dass auf die dortige Beschreibung verwiesen wird.

In Figur 9 ist das Filterelement 10 mit dem ersten Gehäuseteil 112 verbunden, da die Gehäusekopplungselemente 26 im Kopplungsbereich 50 zwischen dem jeweiligen Stützelement 34 und dem jeweiligen Kopplungselement 36 gekoppelt sind. Dadurch kann das Filterelement 10 mit dem ersten Gehäuseteil 112 in das zweite Gehäuseteil 114 eingeführt oder aus dem Gehäuseteil 112 entnommen werden.

Bei im Betriebszustand zugeschraubtem Filtergehäuse 110 ist das Filterelement 10 um die Verbindungsachse 22 so positioniert, dass die Gehäusekopplungselemente 26 im Lösebereich 52 angeordnet sind und das Filterelement 10 damit von dem ersten Gehäuseteil 112 gelöst ist. Bei Öffnen des Filtergehäuses 110 durch Verdrehen des ersten Gehäuseteils 112 im Gegenuhrzeigersinn gegen das zweite Gehäuseteil 114 können die Gehäusekopplungselemente 26 in die Kopplungsbereiche 50 des Filterelements 10 eingeführt werden, welche beispielsweise in den Figuren 3 und 4 detailliert dargestellt sind. Dabei gleiten die Gehäusekopplungselemente 26 mit den daran angeordneten Hintergriffelementen 28 in die Einführbereiche 38 der Verbindungssegmente 30. Die Hintergriffelemente 28 gleiten unter die Kopplungselemente 36 der Verbindungssegmente 30, bis die Hintergriffelemente 28 an den Endanschlägen 32 des jeweiligen Kopplungselements 36, insbesondere am jeweiligen Halter 42, bzw. der Verbindungssegmente 30 anliegen. Die Gehäusekopplungselemente 26 werden dabei in radialer Richtung von außen durch die Stützelemente 34 abgestützt. Wird das erste Gehäuseteil 112 weiter im Gegenuhrzeigersinn gegen das zweite Gehäuseteil 114 verdreht, so kann das erste Gehäuseteil 112 jetzt das Filterelement 10 mitdrehen. Ist das erste Gehäuseteil 112 über das Schraubgewinde 108 ganz von dem zweiten Gehäuseteil 114 getrennt, so kann das Filterelement 10 mit dem ersten Gehäuseteil 112 aus dem zweiten Gehäuseteil 114 entnommen werden.

Beim Einsetzen des Filterelements 10 in das Filtergehäuse 110 kann das Filterelement im mit dem ersten Gehäuseteil 112 verrasteten Zustand in das zweite Gehäuseteil 114 eingesetzt werden. Wird dann das erste Gehäuseteil 112 im Uhrzeigersinn gegen das zweite Gehäuseteil 114 verdreht, um das Filtergehäuse 110 mit dem Schraubgewinde 108 zu verschließen, können die Kopplungselemente 26 aus dem Kopplungsbereich 50 herausgedreht und damit von den Verbindungssegmenten 30 der Endscheibe 16 gelöst werden. Die Hintergriffelemente 28 gleiten dabei aus den zweiten Stützelementen 36 heraus, so dass die Gehäusekopplungselemente 26 im Lösebereich 52 der Verbindungsanordnung 20 angeordnet sind. Bei weiterem Verdrehen des ersten Gehäuseteils 112 im Uhrzeigersinn gegen das zweite Gehäuseteil 114 können die Gehäusekopplungselemente 26 nicht wieder in den nächsten Kopplungsbereich 50 gleiten, da die Gehäusekopplungselemente 26 mit ihren Hintergriffelementen 28 an dem jeweils nächsten Endanschlag 32 des nächsten Kopplungselements 36, insbesondere des jeweiligen nächsten Halters 42, bzw. des nächsten Verbindungssegments 30 der Endscheibe 16 zur Anlage kommen. So bleibt das Filterelement 10 konstruktiv einfach gelöst von dem ersten Gehäuseteil 112. Das Zusammenwirken der Gehäusekopplungselemente 26 und der mindestens zwei Verbindungssegmente 30 der Endscheibe 16 dient somit einer konstruktiv einfachen, kostengünstig realisierbaren, sicheren und schnellen Montage und Demontage eines Filterelements 10 mit mindestens einer erfindungsgemäßen Endscheibe 16.

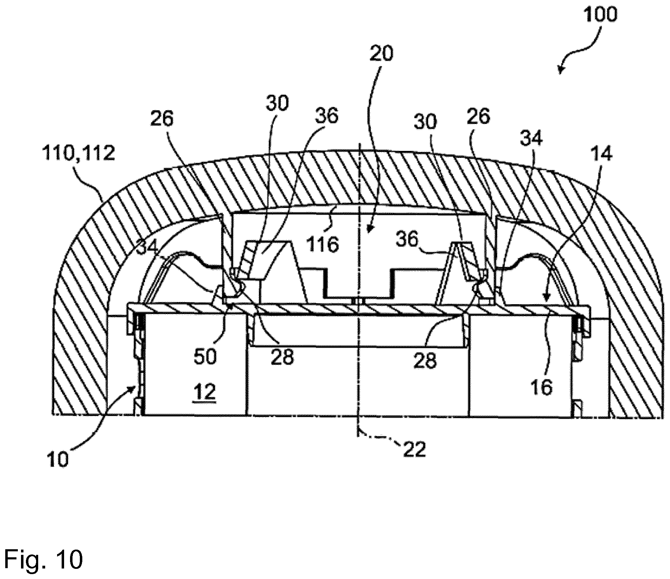

Figur 10 zeigt eine Detailansicht des Filtersystems 100 nach Figur 9 mit Fokus auf die Verbindungsanordnung 20. In dieser Darstellung sind die Gehäusekopplungselemente 26 und Verbindungssegmente 30 der Endscheibe 16, mit Kopplungselement 36 und Stützelement 34, nochmals detailliert dargestellt. Die Gehäusekopplungselemente 26 sind mit ihren Hintergriffelementen 28 unter Kopplungselementen 36 der Endscheibe 16 hintergriffen und werden in radialer Richtung nach außen vom Stützelement 34 abgestützt.

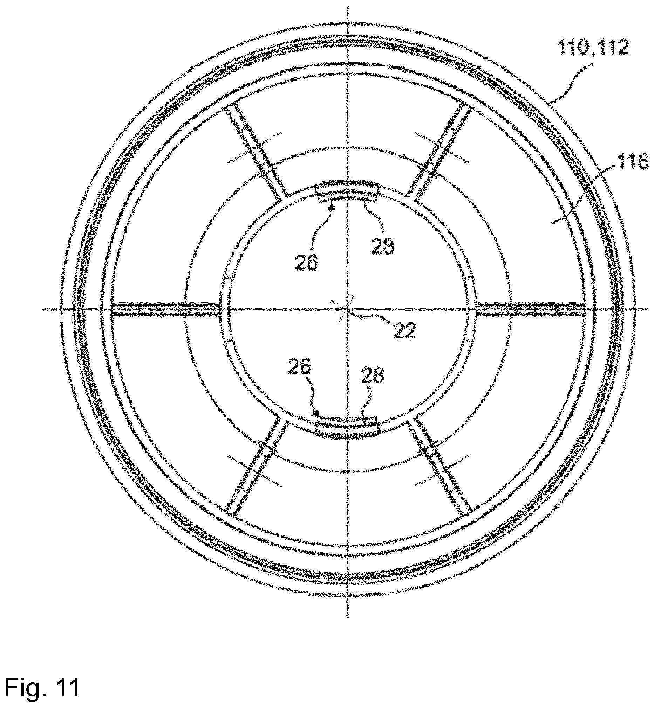

In Figur 11 ist eine Draufsicht auf die Innenseite eines ersten Gehäuseteils 112 des Filtersystems 100 nach Figur 7 mit den Gehäusekopplungselementen 26 dargestellt. Die beiden Kopplungselemente 26 sind auf der Innenseite 116 des ersten Gehäuseteils 112 auf einem Kreis um die Verbindungsachse 22 angeordnet und ragen mit ihren Hintergriffelementen 28, welche hervorstehen, in radialer Richtung nach innen. Die Gehäusekopplungselemente 26 sind dabei kreisbogenförmig einander gegenüberliegend angeordnet. Die Kopplungsbereiche 50 und Lösebereiche 52 der Verbindungsanordnung 20 sind erfindungsgemäß in alternierender Folge angeordnet, so dass das Verschließen und Öffnen des Filtergehäuses 110 wie beschrieben ablaufen kann. Außerdem kann so das Gewicht des Filterelements 10 bei der Montage und Demontage im Filtergehäuse 110 vorteilhaft von dem ersten Gehäuseteil 112 aufgenommen werden.

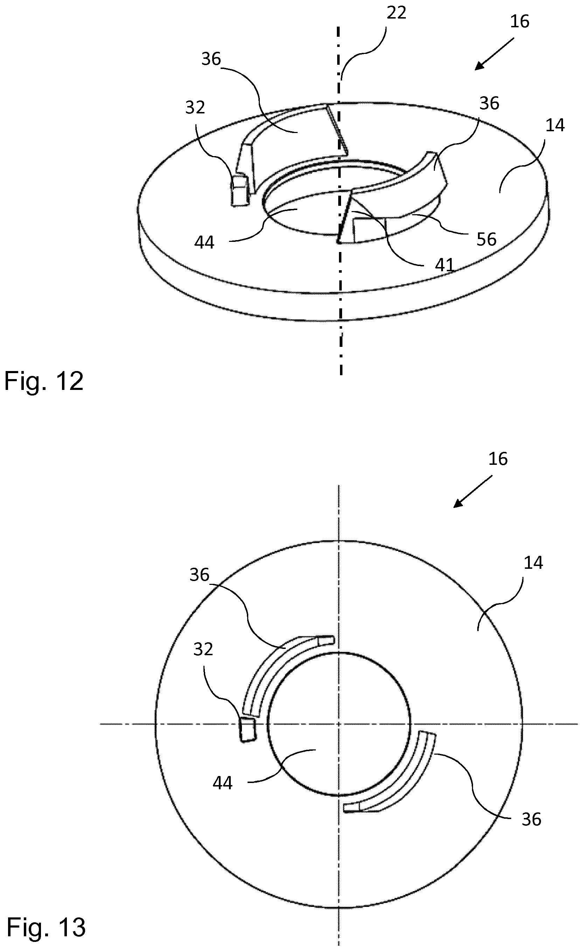

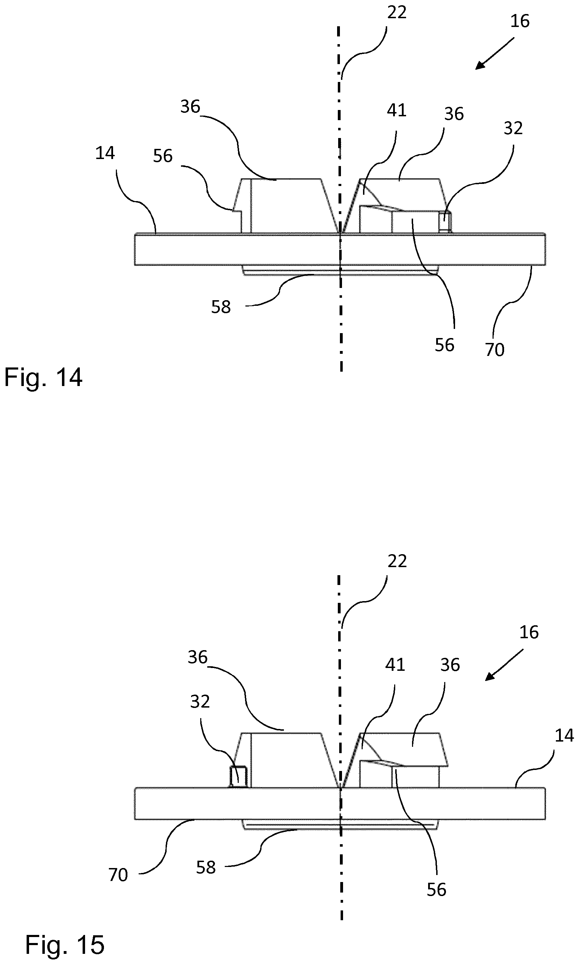

Figuren 12 bis 15 zeigen die Endscheibe 16 in nicht erfindungsgemäßen Ausführungsformen mit einem Endanschlag 32, welcher auf der Stirnseite 14 der Endscheibe 16 einem Kopplungselement 36 zugeordnet ist. Der Endanschlag 32 ist zu dem jeweiligen Kopplungselement 36 beabstandet. Der Endanschlag 32 befindet sich in diesen Ausführungsformen auf der Stirnseite 14 der Endscheibe 16. Der Endanschlag 32 ist in Umfangsrichtung hierbei im Gegenuhrzeigersinn zum Kopplungselement 36 beabstandet angeordnet. Anschaulich beschrieben ist der Endanschlag 32 zu dem Kopplungselement 36 in Losdrehrichtung des nicht gezeigten ersten Gehäuseteils 112 von dem zweiten Gehäuseteil 114 benachbart angeordnet. Der Endanschlag 32 kann nicht gezeigt auch zusätzlich oder alternativ radial, insbesondere radial nach außen von der Verbindungsachse 22 aus betrachtet, beabstandet benachbart auf der Endscheibe 16 angeordnet sein. Der Endanschlag 32 kann hierbei anschaulich beschrieben insbesondere zum jeweils zugeordneten Kopplungselement 36 konzentrisch angeordnet sein.

## Patentansprüche

1. Endscheibe (16) für ein Filterelement, auf einer Stirnseite (14) umfassend mindestens zwei separate, kreisbogenförmige Kopplungselemente (36), die zum axialen Hintergriff für ein korrespondierendes Gehäusekopplungselement (26) zur Herstellung einer Steck-Drehverbindung zwischen dem Filterelement (10) und einem Gehäuseteil (112) ausgebildet sind, wobei die Kopplungselemente (36) vom Mittelpunkt der Endscheibe (16) aus betrachtet diametral gegenüberliegend angeordnet sind und wobei mindestens ein Endanschlag (32) mindestens einem Kopplungselement (36) zugeordnet ist, welcher einen Anschlag für eine Drehung des korrespondierenden Gehäusekopplungselements (26) um eine Verbindungsachse (22) zwischen dem Filterelement und dem Gehäuseteil bildet **dadurch gekennzeichnet, dass** die Kopplungselemente (36) jeweils einen nach radial außen gerichteten Hintergriff (56) aufweisen und dass die Endscheibe (16) zu den Kopplungselementen (36) korrespondierende kreisbogenförmige Stützelemente (34) zur Abstützung der Gehäusekopplungselemente aufweist, wobei die Stützelemente (34) radial beabstandet zu den Kopplungselementen (36) und zu dem mindestens einen Endanschlag (32) angeordnet sind und bezogen auf die Verbindungsachse (22) radial außenliegend und konzentrisch zum korrespondierenden Kopplungselement (36) angeordnet sind.

2. Endscheibe gemäß Anspruch 1, wobei die Kopplungselemente (36) jeweils zwei Halter (42) aufweisen.

3. Endscheibe gemäß Anspruch 2, wobei die Kopplungselemente (36) zwischen den beiden Haltern (42) entlang der Längserstreckung des jeweiligen Kopplungselements (36) einen Freiraum (54) aufweisen.

4. Endscheibe gemäß Ansprüchen 2 oder 3, wobei ein Halter (42) des jeweiligen Kopplungselements (36) eine Eindrehschräge (41) aufweist, insbesondere eine Eindrehschräge (41), welche bezogen auf die Verbindungsachse (22) in Umfangsrichtung beabstandet zum Endanschlag (32) des Kopplungselements (36) angeordnet ist.

5. Endscheibe (16) gemäß einem der vorigen Ansprüche, wobei die Stützelemente (34) eine Einführschräge (40) aufweisen.

6. Endscheibe (16) gemäß Anspruch 5, wobei ein Einführbereich (38) insbesondere an dem Ende des Stützelements (34) angeordnet ist, welches bezogen auf die Verbindungsachse (22) in Umfangsrichtung beabstandet von dem Endanschlag (32) ist.

7. Endscheibe (16) gemäß einem der vorigen Ansprüche, wobei das Stützelement (34) in Längserstreckung kleiner oder gleich dem Freiraum (54) des korrespondierenden Kopplungselements (36) ist.

8. Filterelement (10), umfassend einen Filterkörper (12) und mindestens eine Endscheibe (16) gemäß einem der vorhergehenden Ansprüche.

9. Filtersystem (100), umfassend ein Filterelement (10) mit einem Filterkörper (12) und mindestens einer Endscheibe (16) nach einem der Ansprüche 1 bis 7 und ein Gehäuse (110) mit einem ersten Gehäuseteil (112) und einem zweiten Gehäuseteil (114), wobei das erste Gehäuseteil (112) mindestens zwei sich axial erstreckende Gehäusekopplungselemente (26) zum axialen Hintergreifen der endscheibenseitigen Kopplungselemente (36) aufweist, sodass mittels einer Steck-Drehbewegung bezüglich der Verbindungsachse (22) zwischen dem ersten Gehäuseteil (112) und dem Filterelement (10) eine Steck-Dreh-Verbindung herstellbar ist.

10. Filtersystem nach Anspruch 9, wobei Kopplungselemente (36) und Stützelemente (34) jeweils einen Kopplungsbereich (50) und einen Lösebereich (52) zum Zusammenwirken mit den Gehäusekopplungselementen (26) in alternierender Reihenfolge radial umlaufend aufweisen.

11. Filtersystem nach Anspruch 9 oder 10, wobei das erste Gehäuseteil (112) und das zweite Gehäuseteil (114) mittels einer Schraubverbindung miteinander verbindbar sind, und wobei die aus Gehäusekopplungselementen (26), endscheibenseitigen Kopplungselementen (36) und Stützelementen (34) gebildete Verbindungsanordnung (20) derart ausgestaltet ist, dass das Gehäuseteil (112) und das Filterelement (10) beim Lösen der Schraubverbindung zwischen den Gehäuseteilen (112, 114) miteinander verbunden werden.

12. Filtersystem nach einem der Ansprüche 9 bis 11, wobei die Gehäusekopplungselemente (26) radial nach innen ausgerichtete Hintergriffelemente (28) zum Zusammenwirken mit den radial nach außen gerichteten Hintergriffen (56) der Kopplungselemente (36) aufweisen.

13. Filtersystem nach Anspruch 12, wobei die Hintergriffelemente wenigstens in radialer Richtung elastisch ausgebildet sind.

## Claims

1. End disc (16) for a filter element comprising on a front face (14) at least two separate arc-shaped coupling elements (36) designed as axial rear grip for a corresponding housing coupling element (26) allowing a plug-in/rotational connection between the filter element (10) and a housing component (112), wherein the coupling elements (36), as seen from the center of the end disc (16), are disposed diametrically opposed and wherein at least one end stop (32) is associated with at least one coupling element (36), which forms a stop for a rotation of the corresponding housing coupling element (26) around a connecting axis (22) between the filter element and the housing component, **characterized in that** the coupling elements (36) each feature a radially outwardly directed rear grip (56) and **in that** the end disc (16) features arc-shaped support members (34) corresponding to the coupling elements (36) for supporting the housing coupling elements, wherein the support members (34) are radially spaced apart with respect to the coupling elements (36) and with respect to the at least one end stop (32) and disposed, with respect to the connecting axis (22), radially outwardly and concentrically with respect to the corresponding coupling element (36).

2. End disc according to claim 1, wherein the coupling elements (36) each feature two supports (42).

3. End disc according to claim 2, wherein the coupling elements (36) feature a clearance (54) between the two supports (42) along the longitudinal extension of the respective coupling element (36).

4. End disc according to claim 2 or 3, wherein a support (42) of the respective coupling element (36) features a screw-in bevel (41), in particular a screw-in bevel (41) which, with respect to the connecting axis (22), is spaced apart circumferentially from the end stop (32) of the coupling element (36).

5. End disc (16) according to one of the preceding claims, wherein the support members (34) feature an insertion bevel (40).

6. End disc (16) according to claim 5, wherein an insertion area (38) is in particular disposed at the end of the support member (34) which, with respect to the connecting axis (22), is spaced apart circumferentially from the end stop (32).

7. End disc (16) according to one of the preceding claims, wherein the support member (34) is smaller than or equal to the clearance (54) of the corresponding coupling element (36) in the longitudinal extension.

8. Filter element (10), comprising a filter body (12) and at least one end disc (16) according to one of the preceding claims.

9. Filter system (100), comprising a filter element (10) having a filter body (12) and at least one end disc (16) according to one of the claims 1 to 7 and a housing (110) having a first housing component (112) and a second housing component (114), wherein the first housing component (112) features at least two axially extending housing coupling elements (26) for axially engaging behind the coupling elements (36) on the side of the end disc so that it is possible to realize a plug-in/rotational connection by using a plug-in/rotational motion with respect to the connecting axis (22) between the first housing component (112) and the filter element (10).

10. Filter system according to claim 9, wherein coupling elements (36) and support members (34) each feature, in alternating sequence and radially circumferentially, a coupling area (50) and a release area (52) for interacting with the housing coupling elements (26).

11. Filter system according to claim 9 or 10, wherein the first housing component (112) and the second housing component (114) can be connected to each other using a screwed connection and wherein the connection arrangement (20) is realized by housing coupling elements (26), coupling elements (36) on the end disc side and support members (34) in such a way that the housing component (112) and the filter element (10) are connected to each other when the screwed connection between the housing components (112, 114) is released.

12. Filter system according to one of the claims 9 to 11, wherein the housing coupling elements (26) feature radially inwardly directed rear grip elements (28) for interacting with the radially outwardly directed rear grips (56) of the coupling elements (36).

13. Filter system according to claim 12, wherein the rear grip elements are designed elastically at least in the radial direction.

## Revendications

1. Disque d'extrémité (16) pour un élément filtrant, comprenant sur une face frontale (14) au moins deux éléments d'accouplement (36) en arc de cercle séparés faisant office de retenue arrière axiale pour un élément d'accouplement de boîtier (26) correspondant en vue d'établir un raccordement enfichable et tournant entre l'élément filtrant (10) et un composant de boîtier (112), les éléments d'accouplement (36), considéré depuis le centre du disque d'extrémité (16), étant diamétralement opposés, et au moins une butée d'extrémité (32) étant affectée à au moins un élément d'accouplement (36), ladite butée formant une butée pour une rotation de l'élément d'accouplement de boîtier (26) correspondant autour d'un axe de liaison (22) entre l'élément filtrant et le composant de boîtier, **caractérisé en ce que** les éléments d'accouplement (36) présentent chacun une retenue arrière (56) dirigée vers l'extérieur en sens radial et **en ce que** le disque d'extrémité (16) présente des éléments d'appui (34) en arc de cercle correspondant aux éléments d'accouplement (36) et servant d'appui aux éléments d'accouplement de boîtier, les éléments d'appui (34) étant espacés en sens radial des éléments d'accouplement (36) et orientés vers la butée d'extrémité (32), au moins au nombre d'une, et étant disposés, par rapport à l'axe de liaison (22), à l'extérieur en sens radial et de manière concentrique par rapport à l'élément d'accouplement (36) correspondant.

2. Disque d'extrémité selon la revendication 1, les éléments d'accouplement (36) présentant chacun deux supports (42).

3. Disque d'extrémité selon la revendication 2, les éléments d'accouplement (36) présentant un interstice (54) entre les deux supports (42), dans le sens de la longueur de l'élément d'accouplement (36) respectif.

4. Disque d'extrémité selon la revendication 2 ou 3, un support (42) de l'élément d'accouplement (36) respectif présentant un biseau de vissage (41), notamment un biseau de vissage (41) qui est espacé, par rapport à l'axe de liaison (22), en direction circonférentielle, de la butée d'extrémité (32) de l'élément d'accouplement (36).

5. Disque d'extrémité (16) selon l'une des revendications précédentes, les éléments d'appui (34) présentant un biseau d'introduction (40).

6. Disque d'extrémité (16) selon la revendication 5, une zone d'introduction (38) étant disposée notamment à l'extrémité de l'élément d'appui (34) espacé, par rapport à l'axe de liaison (22), en direction circonférentielle de la butée d'extrémité (32).

7. Disque d'extrémité (16) selon l'une des revendications précédentes, l'élément d'appui (34) étant, dans la longueur, plus petit ou de la même taille que l'interstice (54) de l'élément d'accouplement (36) correspondant.

8. Élément filtrant (10), comprenant un corps de filtre (12) et au moins un disque d'extrémité (16) selon l'une des revendications précédentes.

9. Système de filtre (100), comprenant un élément filtrant (10) ayant un corps de filtre (12) et au moins un disque d'extrémité (16) selon l'une des revendications 1 à 7, ainsi qu'un boîtier (110) ayant un premier composant de boîtier (112) et un second composant de boîtier (114), le premier composant de boîtier (112) présentant au moins deux éléments d'accouplement de boîtier (26) s'étendant en sens axial et servant de retenue arrière axiale des éléments d'accouplement (36) situés du côté du disque d'extrémité, de sorte qu'il soit possible d'établir un raccordement enfichable et tournant, par un mouvement d'embrochage/de rotation, par rapport à l'axe de liaison (22), entre le premier composant de boîtier (112) et l'élément filtrant (10).

10. Système de filtre selon la revendication 9, des éléments d'accouplement (36) et des éléments d'appui (34) présentant chacun, en alternance en sens radial, une zone d'accouplement (50) et une zone de desserrage (52) en vue de l'interaction avec les éléments d'accouplement de boîtier (26).

11. Système de filtre selon la revendication 9 ou 10, le premier composant de boîtier (112) et le second composant de boîtier (114) pouvant être reliés l'un à l'autre par un raccord vissé, et l'agencement de raccordement (20), constitué par les éléments d'accouplement de boîtier (26), les éléments d'accouplement (36) situés du côté du disque d'extrémité et les éléments d'appui (34), étant exécuté de telle manière que le composant de boîtier (112) et l'élément filtrant (10) soient reliés, lors du desserrage du raccord vissé, entre les composants de boîtier (112, 114).

12. Système de filtre selon l'une des revendications 9 à 11, les éléments d'accouplement de boîtier (26) présentant des éléments de retenue arrière (28) dirigés vers l'intérieur en sens radial en vue de l'interaction avec les retenues arrière (56) dirigées vers l'extérieur en sens radial des éléments d'accouplement (36).

13. Système de filtre selon la revendication 12, les éléments de retenue arrière étant réalisés de manière élastique, au moins en sens radial.
